# EUROPÄISCHE PATENTANMELDUNG

(11) **EP 4 390 796 A1**
(43) Veröffentlichungstag der Anmeldung: **26.06.2024**
(21) Anmeldenummer: 22216020.2
(22) Anmeldetag: 22.12.2022
(51) Int. Cl.: G06Q 10/0631

(54) **COMPUTER-IMPLEMENTIERTES VERFAHREN, SYSTEM, COMPUTERPROGRAMM UND COMPUTERLESBARES SPEICHERMEDIUM ZUR HERSTELLUNG ZUMINDEST EINES PRODUKTES DURCH EIN NETZWERK VON BEARBEITUNGSANLAGEN**

(71) Anmelder: Siemens Digital Logistics GmbH, 67227 Frankenthal (DE); Fraunhofer-Gesellschaft zur Förderung der angewandten Forschung e.V., 80686 München (DE); German Edge Cloud GmbH & Co. KG, 65760 Eschborn (DE)
(72) Erfinder: HAAGER, Dominik, 83052 Bruckmühl (DE); WEHRSTEDT, Dr. Jan Christoph, 81829 München (DE); ROSEN, Roland, 82229 Seefeld (DE); KLEIN, Dr. Daniel, 92280 Kastl (DE); ISINGER, Theodor, 68199 Mannheim (DE); WOLFRUM, Dr. Philipp, 81539 München (DE); ASANI, Likhith Reddy, 90765 Fürth (DE); GAERTTNER, Dr. Johannes, 76199 Karlsruhe (DE); SIMON, Stefanie, 77974 Meißenheim (DE); FALKENAU, Franz, 71638 Ludwigsburg (DE); GÜNTHER, Lisa Charlotte, 70190 Stuttgart (DE); JELSCHOW, Vladimir, 29351 Eldingen Wohlenrode (DE); KUJATH, Marc, 39104 Magdeburg (DE); KUTZLER, Tobias, 39179 Barleben OT Meitzendorf (DE); LOEWKE, Christian, 39106 Magdeburg (DE); STEINERT, Harald, 56269 Dierdorf (DE); EHRMANN, Christian, 65307 Bad Schwalbach (DE); SEIDEL, Holger, 39167 Niederndodeleben (DE)
(74) Vertreter: Siemens Patent Attorneys

(57) **Zusammenfassung**

Die Erfindung betrifft u. a. ein Computer-implementiertes Verfahren zur Herstellung zumindest eines Produktes (1) durch ein Netzwerk (20) von Bearbeitungsanlagen (10) umfassend zumindest eine Produktionsanlage (10) und zumindest eine Transportanlage (10), wobei die Herstellung des jeweiligen Produkts (1) zumindest zwei sequenzielle Bearbeitungsschritte umfasst, welche zumindest einen Herstellungsschritt und zumindest einen Transportschritt umfassen. U.a. ein verbessertes Verfahren bereitzustellen, welches insbesondere das Zusammenspiel der Bearbeitungsschritte verbessert, werden folgende Verfahrensschritte vorgeschlagen: Ermitteln der Verfügbarkeit der jeweiligen Rohmaterialien (2) sowie der Verfügbarkeit einer jeweiligen Bearbeitungskapazität der jeweiligen Bearbeitungsanlage (10H, 10T) für den jeweiligen Bearbeitungsschritt (100H, 100T); Ermitteln einer kombinierten, bearbeitbaren Menge (4H, 4T) der jeweiligen Rohmaterialien (2) des jeweiligen Produkts (1) durch die jeweilige Bearbeitungsanlage (10H, 10T) während eines vorgebbaren Zeitintervalls mittels einer Simulation der jeweiligen Bearbeitungsanlage (10H, 10T) mithilfe der ermittelten Verfügbarkeiten; Ermitteln einer kombinierten Bearbeitungsmenge (5H, 5T) der jeweiligen Rohmaterialien (2) des zumindest einen Produkts (1) durch die jeweilige Bearbeitungsanlage (10H, 10T) für das vorgebbare Zeitintervall anhand der ermittelten, kombinierten bearbeitbaren Menge (4H, 4T), wobei die kombinierte Bearbeitungsmenge (5H, 5T) möglichst mindestens einer kombinierten Zielmenge (6H, 6T) entspricht; und Veranlassen der Durchführung des jeweiligen Bearbeitungsschritts (100H, 100T) bei der Herstellung des jeweiligen Produkts (1) durch zumindest eine bestimmte der Bearbeitungsanlagen (10H, 10T) während des vorgebbaren Zeitintervalls gemäß der ermittelten kombinierten Bearbeitungsmenge (5H, 5T) der jeweiligen Rohmaterialien (2).

## Beschreibung

Die Erfindung betrifft ein computer-implementiertes Verfahren zur Herstellung zumindest eines Produktes durch ein Netzwerk von Bearbeitungsanlagen umfassend zumindest eine Produktionsanlage und zumindest eine Transportanlage, wobei die Herstellung des jeweiligen Produkts zumindest zwei sequenzielle Bearbeitungsschritte umfasst, welche zumindest einen Herstellungsschritt und zumindest einen Transportschritt umfassen, wobei bei dem jeweiligen Herstellungsschritt ausgehend von jeweiligen Rohmaterialien mittels der jeweiligen Produktionsanlage ein jeweiliges Zwischenprodukt hergestellt wird, wobei das jeweilige Zwischenprodukt des vorhergehenden Herstellungsschrittes von den jeweiligen Rohmaterialien des nachfolgenden Herstellungsschrittes umfasst ist und wobei das jeweilige Zwischenprodukt des letzten Herstellungsschrittes das jeweilige Produkt ist, und wobei bei dem jeweiligen Transportschritt die jeweiligen Rohmaterialien, insb. von der Produktionsanlage des vorhergehenden Herstellungsschrittes, mittels der jeweiligen Transportanlage zur Produktionsanlage des nachfolgenden Herstellungsschrittes transportiert wird.

Weiterhin betrifft die Erfindung ein System, insbesondere eine Produktionsanlage oder eine Transportanlage, für ein Netzwerk von Bearbeitungsanlagen umfassend zumindest eine Produktionsanlage und zumindest eine Transportanlage zur Herstellung zumindest eines Produktes.

Ferner betrifft die Erfindung ein Computerprogramm, umfassend Befehle, die bei der Ausführung des Programms durch das genannte System dieses veranlassen, das genannte Verfahren auszuführen.

Schließlich betrifft die Erfindung ein computerlesbares Speichermedium umfassend Befehle, die bei der Ausführung durch das genannte System dieses veranlassen, das genannte Verfahren auszuführen.

Derartige Vorrichtungen bzw. ein derartiges Verfahren kommen bei der Herstellung verschiedener Produkte zum Einsatz. Oftmals werden bisher die einzelnen Bearbeitungsschritte eigenständig und unabhängig voneinander durchgeführt und betrachtet. Dabei werden die jeweils benötigten Daten durch lokale Systeme, bspw. innerhalb eines Unternehmens und z.B. mittels ERP-Systemen (englisch "Enterprise-Resource-Planning"), einem MES (Manufacturing Execution System) und/oder einem Sensornetzwerk bzw. einer oder mehreren speicherprogrammierbare(n) Steuerung(en) (SPS, englisch: programmable logic controller, PLC), zur Verfügung gestellt.

Eine Aufgabe der Erfindung ist es, ein verbessertes Verfahren, ein entsprechendes System, ein entsprechendes Computerprogramm und ein entsprechendes computerlesbares Speichermedium bereitzustellen, welches insbesondere das Zusammenspiel der Bearbeitungsschritte verbessert.

Eine Lösung der Aufgabe ergibt sich durch ein computer-implementiertes Verfahren der eingangs genannten Art durch folgende Verfahrensschritte:
- Ermitteln der Verfügbarkeit der jeweiligen Rohmaterialien sowie der Verfügbarkeit einer jeweiligen Bearbeitungskapazität der jeweiligen Bearbeitungsanlage für den jeweiligen Bearbeitungsschritt;
- Ermitteln einer kombinierten, bearbeitbaren Menge der jeweiligen Rohmaterialien des jeweiligen Produkts durch die jeweilige Bearbeitungsanlage während eines vorgebbaren Zeitintervalls mittels einer Simulation der jeweiligen Bearbeitungsanlage mithilfe der ermittelten Verfügbarkeit der jeweiligen Rohmaterialien und der ermittelten Verfügbarkeit der jeweiligen Bearbeitungskapazität der jeweiligen Bearbeitungsanlage;
- Ermitteln einer kombinierten Bearbeitungsmenge der jeweiligen Rohmaterialien des zumindest einen Produkts durch die jeweilige Bearbeitungsanlage für das vorgebbare Zeitintervall anhand der ermittelten, kombinierten bearbeitbaren Menge, wobei die kombinierte Bearbeitungsmenge der jeweiligen Rohmaterialien möglichst mindestens einer kombinierten Zielmenge der jeweiligen Rohmaterialien entspricht; und
- Veranlassen der Durchführung des jeweiligen Bearbeitungsschritts bei der Herstellung des jeweiligen Produkts durch zumindest eine bestimmte der Bearbeitungsanlagen während des vorgebbaren Zeitintervalls gemäß der ermittelten kombinierten Bearbeitungsmenge der jeweiligen Rohmaterialien.

Eine weitere Lösung der Aufgabe ergibt sich durch ein System der eingangs genannten Art, dadurch dass das System zumindest eine Kommunikations-Schnittstelle zur Kommunikation mit zumindest einer weiteren der Bearbeitungsanlagen aufweist, und das System zumindest einen Prozessor aufweist, der so konfiguriert ist, dass er die Schritte des vorgeschlagenen Verfahrens ausführt.

Ferner ergibt sich eine weitere Lösung der Aufgabe durch ein Computerprogramm der eingangs genannten Art, wobei das Computerprogramm Befehle umfasst, die bei der Ausführung des Programms durch das vorgeschlagene System dieses veranlassen, das vorgeschlagene Verfahren auszuführen.

Schließlich ergibt sich eine weitere Lösung der Aufgabe durch ein computerlesbares Speichermedium der eingangs genannten Art, wobei das computerlesbare Speichermedium Befehle umfasst, die bei der Ausführung durch das vorgeschlagene System dieses veranlassen, das vorgeschlagene Verfahren auszuführen. Vorzugsweise ist das Speichermedium nichtflüchtig.

Die Bearbeitung umfasst zumindest einen Herstellungsschritt und zumindest einen Transportschritt. Entsprechend umfassen die Bearbeitungsanlagen zumindest eine Produktionsanlage, welche den zumindest einen Herstellungsschritt durchführt, sowie eine Transportanlage, welche den zumindest einen Transportschritt durchführt.

Die Bearbeitung von Rohmaterialien bzw. einem jeweiligen Zwischenprodukt umfasst somit wie erwähnt einen oder mehrere Herstellungsschritte, bei welchem/n die Rohmaterialien bzw. das jeweilige Zwischenprodukt bspw. verarbeitet oder gewandelt werden, wozu bspw. Fertigungsverfahren (insbesondere Urformen, Umformen, Trennen, Fügen, Beschichten, Stoffeigenschaften Ändern, Montieren, Demontieren) insbesondere in der diskreten Fertigung gezählt werden können. Zu den Herstellungsschritten können auch Verarbeitungsschritte von Stoffen und Materialien in der Prozessindustrie gezählt werden, welche chemische, physikalische, biologische oder andere technische Prozesse und Verfahren (insbesondere Umsetzen, Formen, Vermischen, Entmischen, Gießen, Pressen oder auch Destillieren, Bewirken einer Kristallisation, Rektifikation, Schmelzen, Backen) umfassen kann. Dabei wird der jeweilige Herstellungsschritt von zumindest einer jeweiligen Produktionsanlage, bspw. einer Werkzeugmaschine oder sonstigen Produktionsmaschine der diskreten Fertigungsindustrie und/oder einer Maschine oder Anlage der Prozessindustrie durchgeführt. Weiterhin umfasst die Bearbeitung von Rohmaterialien bzw. einem jeweiligen Zwischenprodukt wie erwähnt einen oder mehrere Transportschritte. Der jeweilige, genannte Transportschritt wird dabei durch eine jeweilige Transportanlage durchgeführt, welche bspw. Vorrichtungen und Systeme für inner- oder außerbetriebliche Transport-, Umschlags- und Lagerprozesse umfasst. Vorzugsweise erfolgt der Transport dabei außerbetrieblich bzw. von einem ersten Ort (bspw. einer vorgelagerten Produktionsanlage) an den Ort einer nachgelagerten Produktionsanlage, wobei hierzu insbesondere mehrere Kilometer bis zu mehrere Hundert oder mehrere Tausend Kilometer zurückgelegt werden können. Dabei bilden die Produktionsanlage(n) und die Transportanlage(n) ein Netzwerk von Bearbeitungsanlagen: das von einer ersten Produktionsanlage hergestellte Zwischenprodukt kann bspw. von einer Transportanlage zur zweiten Produktionsanlage transportiert werden, wo der nächste Bearbeitungsschritt vorgenommen wird, um letztendlich - ggf. über weitere Transport- und Herstellungsschritte - das Produkt herzustellen. Das Netzwerk kann im einfachsten Fall bspw. auch genau eine Produktionsanlage und eine Transportanlage umfassen.

Dabei wird das jeweilige Zwischenprodukt des jeweiligen Herstellungsschrittes insbesondere als jeweiliges Rohmaterial des nachfolgenden Transportschrittes (ggf. neben weiteren Rohmaterialien) verstanden. Weiterhin werden die jeweiligen Rohmaterialien, ggf. inklusive des jeweiligen Zwischenproduktes des vorhergehenden Herstellungsschrittes, durch den jeweiligen Herstellungsschritt zu einem entsprechenden, jeweiligen (weiterverarbeiteten) Zwischenprodukt verarbeitet, welches dann jeweils wiederum als jeweiliges Rohmaterial des nachfolgenden Transportschrittes (ggf. neben weiteren Rohmaterialien) verstanden werden kann.

Für zumindest zwei nacheinander ausgeführte Bearbeitungsschritte, bspw. einen Transportschritt und einen nachfolgend ausgeführten Herstellungsschritt oder einen Herstellungsschritt und einen nachfolgend ausgeführten Transportschritt, werden nun folgende Verfahrensschritte durchgeführt. Dabei können auch mehr als zwei nacheinander ausgeführte Bearbeitungsschritte bzw. die entsprechenden Bearbeitungsanlagen betrachtet werden.

Die Verfügbarkeit der jeweiligen Rohmaterialien, bspw. an der jeweiligen Bearbeitungsanlage, wird ermittelt. Zu der Verfügbarkeit zählen zum Beispiel, welche Menge des jeweiligen Rohmaterials und ggf. wann das jeweilige Rohmaterial an einem bestimmten Ort, bspw. also an der jeweiligen Bearbeitungsanlage, insbesondere an der jeweiligen Produktionsanlage, zur Verfügung steht. Die Menge kann dabei bei einer diskreten Fertigung in Stückzahlen und bei einer Fertigung in der Prozessindustrie in Volumeneinheiten oder Masseeinheiten angegeben werden.

Weiterhin wird die Verfügbarkeit einer jeweiligen Bearbeitungskapazität der jeweiligen Bearbeitungsanlage für den jeweiligen Bearbeitungsschritt ermittelt.

Bei der Ermittlung der jeweiligen Bearbeitungskapazität wird insbesondere berücksichtigt, ob und wie viel Ausrüstung und Betriebspersonal der jeweiligen Bearbeitungsanlage verfügbar sind, damit die Bearbeitungsanlage bspw. unter Volllast betrieben werden kann. Bei der Ermittlung der Verfügbarkeit der Bearbeitungskapazität kann also insbesondere berücksichtigt werden, wie viel qualifiziertes Betriebspersonal zur Verfügung steht, was die Bearbeitungskapazität wesentlich beeinflussen kann. Bspw. kann also berücksichtigt werden, dass am Wochenende, an Feiertagen, während Urlaubszeiten, während Streiks oder bei Krankheitswellen weniger Betriebspersonal zur Verfügung steht, sodass die Bearbeitungskapazität geringer ist als bei normalen Arbeits- oder Werktagen. Weiterhin kann bei der Ermittlung der Verfügbarkeit der Bearbeitungskapazität berücksichtigt werden, wenn Anlagenteile der Bearbeitungsanlage beschädigt sind oder gewartet werden müssen und daher nicht zur Verfügung stehen, oder wenn die Bearbeitungsanlage umgebaut oder erweitert wird oder dergleichen, was die Bearbeitungskapazität verringern oder erhöhen kann. Zusätzlich kann bei der Ermittlung der Verfügbarkeit der Bearbeitungskapazität berücksichtigt werden, wenn die sonstige Infrastruktur der jeweiligen Bearbeitungsanlage beeinträchtigt ist, bspw. indem bei einer Produktionsanlage elektrischer Strom, Frischwasser oder Abwasser, benötigte Gase, Wärmeversorgung, Verfügbarkeit und Geschwindigkeit der Kommunikationsanbindung, etc. nicht ausreichend verfügbar sind oder indem bei einer Transportanlage Transportwege blockiert sind oder nur eingeschränkt genutzt werden können oder wenn alternative Transportwege verwendet werden müssen, was die Transportkapazität bei längeren Transportwegen bezüglich eines vorgebbaren Zeitintervalls verringern kann, sodass jeweils die Bearbeitungskapazität beeinträchtigt wird.

Für eine Transportanlage wird also bspw. die Transportkapazität zum Transport der jeweiligen Rohmaterialien und/oder des jeweiligen Zwischenprodukts ermittelt, wobei bei den Rohmaterialien der Transport von der Quelle der Rohmaterialien zur passenden Produktionsanlage und bei dem jeweiligen Zwischenprodukt der Transport von der Produktionsanlage des vorhergehenden Herstellungsschrittes zur Produktionsanlage des nachfolgenden Herstellungsschrittes betrachtet wird. Dabei beschreibt die Transportkapazität diejenige Menge des jeweiligen Rohmaterials und/oder des jeweiligen Zwischenprodukts, die die jeweilige Transportanlage transportieren kann, insbesondere innerhalb eines vorgebbaren Zeitintervalls. Für eine Produktionsanlage wird bspw. die Produktionskapazität bzw. die Herstellungskapazität für den jeweiligen Herstellungsschritt ermittelt. Insbesondere wird bei der jeweiligen Produktionskapazität die Verfügbarkeit der erforderlichen Rohmaterialien bzw. Zwischenprodukte nicht betrachtet, da auf diesen Aspekt weiter unten eingegangen wird.

Dabei kann die jeweilige Verfügbarkeit bezüglich des aktuellen Status oder bezüglich eines Status in der Vergangenheit ermittelt werden, bspw. indem entsprechende Daten bei der jeweiligen Bearbeitungsanlage (insbesondere durch eine Berechnungskomponente, welche von der jeweiligen Bearbeitungsanlage umfasst ist) oder einem angeschlossenen IT-System abgefragt werden, bspw. einem ERP-System, einem MES und/oder einem Sensornetzwerk bzw. einer oder mehreren speicherprogrammierbare(n) Steuerung(en). Die jeweilige Verfügbarkeit kann alternativ oder zusätzlich auch für einen Zeitpunkt oder ein Zeitintervall in der Zukunft ermittelt werden, wozu Schätzungen, Extrapolationen oder auch Simulationen bezüglich des Zustroms, des Abflusses und des Vorhanden-Seins von jeweiligen Rohmaterialien und/oder jeweiligen Zwischenprodukten an der jeweiligen Bearbeitungsanlage vorgenommen werden können. Bspw. kann das vorgebbare Zeitintervall einer Zeitspanne von der Gegenwart bis eine oder mehrere Stunden oder Tage in der Zukunft entsprechen. Denkbar ist auch, dass das vorgebbare Zeitintervall einer Zeitspanne von einem Zeitpunkt in der Zukunft (bspw. der Beginn des nächsten (Arbeits-)Tages bzw. der nächsten Woche) bis eine oder mehrere weitere Stunden oder Tage in der Zukunft entspricht.

In einem nächsten Verfahrensschritt wird eine kombinierte bearbeitbare Menge der jeweiligen Rohmaterialien durch die jeweilige Bearbeitungsanlage während eines vorgebbaren Zeitintervalls ermittelt. Dabei beschreibt die jeweilige kombinierte bearbeitbare Menge eine maximale Menge der jeweiligen Rohmaterialien, welche die jeweilige Bearbeitungsanlage unter Berücksichtigung der jeweiligen, verfügbaren Bearbeitungskapazität und der jeweiligen, verfügbaren Rohmaterialien innerhalb des vorgebbaren Zeitintervalls bearbeiten kann. Für das Beispiel einer Produktionsanlage, welche lediglich eine Sorte von Zwischenprodukten herstellt, entspricht die kombinierte bearbeitbare Menge somit der Menge an Zwischenprodukten, welche diese Produktionsanlage innerhalb des vorgebbaren Zeitintervalls maximal herstellen kann. Bei einem weiteren Beispiel, bei welchem eine Produktionsanlage zwei verschiedene Zwischenprodukte herstellen kann, entspricht die kombinierte bearbeitbare Menge somit Mengenkombinationen von dem ersten Zwischenprodukt ZP1 und dem zweiten Zwischenprodukt ZP2, welche diese Produktionsanlage innerhalb des vorgebbaren Zeitintervalls maximal herstellen kann. Wenn die Herstellung des zweiten Zwischenprodukts neun Mal so lang dauert wie die des ersten Zwischenprodukts (und sonst keine Einschränkungen der Produktionskapazität oder der Verfügbarkeit der Rohmaterialien vorliegen), könnte die Produktionsanlage bspw. die Kombinationen 45 Stück des ersten Zwischenprodukts und fünf Stück des zweiten Zwischenprodukts (also 45*ZP1 & 5*ZP2) oder 90*ZP1 & 0*ZP2, 0*ZP1 & 10*ZP2, und so weiter herstellen, so dass also 9i*ZP1 + (10-i)*ZP2 gilt, mit i E [0; 10].f Diese Kombinationen entsprechen bei diesem Beispiel der kombinierten bearbeitbaren Menge des jeweiligen Zwischenprodukts durch die jeweilige Bearbeitungsanlage während eines vorgebbaren Zeitintervalls, wobei bei einigen Situation weitere Einschränkungen, bspw. durch die beschränkte Verfügbarkeit der unterschiedlichen Rohmaterialien oder der verschiedenen Anlagenteile der Produktionsanlage, die kombinierte bearbeitbare Menge zusätzlich beeinflussen können. Ganz ähnliche Überlegungen gelten bezüglich der jeweiligen Transportanlage, die bspw. lediglich eine kombinierte bearbeitbare Menge eines Zwischenprodukts oder auch mehrerer Zwischenprodukte und ggf. zusätzlich Rohmaterialien transportieren kann.

Die genannte Ermittlung erfolgt dabei mittels einer Simulation der jeweiligen Bearbeitungsanlage, wobei der Simulation zumindest die zuvor ermittelten Verfügbarkeiten der jeweiligen Rohmaterialien und der jeweiligen Bearbeitungskapazität der jeweiligen Bearbeitungsanlage als Eingangsgrößen zugeführt werden. Dabei können zur Simulation der jeweiligen Transportanlage bzw. des jeweiligen Transportschritts bspw. passende, verfügbare Software-Produkte, wie z.B. für ereignisdiskrete Simulationen oder auch eine Kombination mit einer kontinuierlichen Simulation eingesetzt werden. Weiterhin können zur Simulation der jeweiligen Produktionsanlage bzw. des jeweiligen Herstellungsschritts bspw. andere passende, verfügbare Software-Produkte eingesetzt werden. Bspw. kann für die Simulation der jeweiligen Bearbeitungsanlage ein digitaler Zwilling der jeweiligen Bearbeitungsanlage verwendet werden, welcher in den genannten Software-Produkten hinterlegt sein kann und die für den jeweiligen Bearbeitungsschritt wesentlichen Eigenschaften und Fähigkeiten der jeweiligen Bearbeitungsanlage beschreibt.

Dabei kann insbesondere vorgesehen sein, dass zunächst eine der Bearbeitungsanlagen simuliert wird, wofür insbesondere als Eingangsdaten die Verfügbarkeit der Rohmaterialien dieser Bearbeitungsanlage benötigt wird. Dabei können die Rohmaterialien der betrachteten Bearbeitungsanlage den Zwischenprodukten des vorgelagerten Bearbeitungsschrittes bzw. der vorgelagerten Bearbeitungsanlage entsprechen, sodass die Eingangsdaten der Simulation der betrachteten Bearbeitungsanlage den Ausgangsdaten der Simulation der vorgelagerten Bearbeitungsanlage entsprechen. Entsprechendes gilt, wenn für eine der Bearbeitungsanlagen und ihre Simulation die nachgelagerte Bearbeitungsanlage und deren Simulation betrachtet wird. Wird also die Simulation einer der Bearbeitungsanlagen gestartet, um die kombinierte, bearbeitbare Menge dieser Bearbeitungsanlage zu ermitteln, so kann (je nach Anforderungen) die Simulation einer oder mehrerer vorgelagerter Bearbeitungsanlagen und/oder nachgelagerter Bearbeitungsanlagen veranlasst werden. Dabei können die jeweiligen Ausgangsdaten der Simulation(en) der vorgelagerten bzw. nachgelagerten Bearbeitungsanlagen an die Simulation der betrachteten Bearbeitungsanlage als Eingangsdaten zugeführt bzw. übermittelt werden. Dabei können die Ausgangsdaten der Simulation(en) der vorgelagerten bzw. nachgelagerten Bearbeitungsanlagen insbesondere die jeweils ermittelten, kombinierten, bearbeitbaren Mengen der vorgelagerten bzw. nachgelagerten Bearbeitungsanlagen sein. Vorteilhafterweise kann das Veranlassen der Simulation der vorgelagerten bzw. nachgelagerten Bearbeitungsanlagen auch iterativ erfolgen, sodass schrittweise zunächst die direkt vorgelagerte bzw. nachgelagerte Bearbeitungsanlage simuliert wird und für deren Simulation jeweils die weiter vorgelagerte bzw. weiter nachgelagerte Bearbeitungsanlage simuliert wird, usw.

Insgesamt kann damit eine "kollaborative Simulation" entstehen durch Beteiligung mehrerer Simulationen bzw. Simulations-Systeme für die einzelnen Bearbeitungsanlagen des Netzwerks. Damit kann ein Austausch von Simulationsergebnissen über die komplette Bearbeitungskette bzw. Supply-Chain erreicht werden, wodurch ein verteiltes Simulationsmodel gebaut werden kann.

In einem nächsten Verfahrensschritt wird eine kombinierte Bearbeitungsmenge der jeweiligen Rohmaterialien durch die jeweilige Bearbeitungsanlage für das vorgebbare Zeitintervall ermittelt, wobei bei dieser Ermittlung die zuvor ermittelte, kombinierte bearbeitbare Menge der jeweiligen Rohmaterialien berücksichtigt wird sowie eine kombinierte Zielmenge der jeweiligen Rohmaterialien. Bspw. kann die kombinierte Zielmenge dabei einer Kombination von einzelnen Zielmengen für die jeweiligen Zwischenprodukte bzw. der jeweiligen Rohmaterialien entsprechen, wobei die jeweilige Zielmenge einer Menge des jeweiligen Zwischenprodukts bzw. der jeweiligen Rohmaterialien entsprechen kann, die während oder zum Ende des vorgebbaren Zeitintervalls nach dem jeweiligen Bearbeitungsschritt durch die jeweilige Bearbeitungsanlage verfügbar sein soll. Insbesondere kann die jeweilige Zielmenge bspw. einer Menge des jeweiligen Zwischenprodukts entsprechen, die bspw. durch die nachfolgende Bearbeitungsanlage bei der betrachteten Bearbeitungsanlage oder durch einen Abnehmer des Produkts beauftragt wird. Somit kann die kombinierte Zielmenge bspw. als ein Auftrag, vorzugsweise mehrere Aufträge, bzgl. einer Menge des jeweiligen Zwischenprodukts bzw. der jeweiligen Rohmaterialien entsprechen, die zu einer bestimmten Zeit verfügbar sein soll, wobei dies insb. für mehrere Aufträge bzw. mehrere verschiedene Zwischenprodukte bzw. Rohmaterialien von verschiedenen Produkten berücksichtigt wird.

Dabei soll die kombinierte Bearbeitungsmenge des jeweiligen Zwischenprodukts bzw. der jeweiligen Rohmaterialien möglichst mindestens einer kombinierten Zielmenge des jeweiligen Zwischenprodukts bzw. der jeweiligen Rohmaterialien entsprechen, was insb. wie folgt erreicht werden kann: Ist die jeweilige Zielmenge des jeweiligen Zwischenprodukts bzw. der jeweiligen Rohmaterialien kleiner oder gleich der kombinierten bearbeitbaren Menge des jeweiligen Zwischenprodukts bzw. der jeweiligen Rohmaterialien, so entspricht die kombinierte Bearbeitungsmenge der jeweiligen Zielmenge. Ist die jeweilige Zielmenge des jeweiligen Zwischenprodukts bzw. der jeweiligen Rohmaterialien größer als die kombinierte bearbeitbare Menge des jeweiligen Zwischenprodukts bzw. der jeweiligen Rohmaterialien, so entspricht die kombinierte Bearbeitungsmenge der kombinierten bearbeitbaren Menge.

Im Kontext des obigen Beispiels einer Produktionsanlage, welche lediglich eine Sorte von Zwischenprodukten herstellt, kann bspw. eine kombinierte Zielmenge von zehn Stück dieses Zwischenprodukts angefragt sein, so dass die kombinierte Bearbeitungsmenge zehn Stück dieses Zwischenprodukts entspricht, es sei denn, dass die kombinierte bearbeitbare Menge kleiner als die zehn Stück dieses Zwischenprodukts ist. Für diesen letztgenannten Fall entspräche die kombinierte Bearbeitungsmenge somit der kombinierten bearbeitbaren Menge. Im Kontext des obigen Beispiels, bei welcher eine Produktionsanlage zwei verschiedene Zwischenprodukte herstellen kann, kann bspw. eine kombinierte Zielmenge von sieben Stück des ersten Zwischenprodukts und sechs Stück des zweiten Zwischenprodukts angefragt sein, so dass die kombinierte Bearbeitungsmenge sieben Stück des ersten Zwischenprodukts und sechs Stück des zweiten Zwischenprodukts entspricht, es sei denn, dass die kombinierte bearbeitbare Menge dies nicht erlaubt, da eine kombinierte bearbeitbare Menge zumindest bzgl. einer der beiden Zwischenprodukte kleiner ist als die entsprechende jeweilige Zielmenge. Für diesen letztgenannten Fall entspräche die kombinierte Bearbeitungsmenge bzgl. des betroffenen Zwischenprodukts somit der bearbeitbaren Menge des betroffenen Zwischenprodukts und bezüglich der anderen Zwischenprodukte - sofern die entsprechende bearbeitbare Menge dies erlaubt - der kombinierten Zielmenge.

Im Zusammenhang dieser beiden Beispiele wird auch verständlich, inwiefern die kombinierte Bearbeitungsmenge "möglichst" mindestens der kombinierten Zielmenge entspricht: Ist die kombinierte bearbeitbare Menge mindestens so groß wie die Zielmenge, so entspricht die kombinierte Bearbeitungsmenge (mindestens) der kombinierten Zielmenge. Aus Gründen einer erhöhten Auslastung der jeweiligen Bearbeitungsanlage kann die kombinierte Bearbeitungsmenge auch höher gewählt werden als die kombinierte Zielmenge, was vor allem bei dem jeweiligen Herstellungsschritt sinnvoll ist. Für diesen letztgenannten Fall kann diejenige Menge an hergestellten Zwischenprodukten bspw. eingelagert werden, welche über die kombinierte Zielmenge hinausgeht. Ist die kombinierte bearbeitbare Menge jedoch kleiner als die Zielmenge, so entspricht die kombinierte Bearbeitungsmenge der kombinierten bearbeitbaren Menge. In solchen Fällen ist es daher nicht möglich, dass die kombinierte Bearbeitungsmenge mindestens der kombinierten Zielmenge entspricht, und es wird eine sinnvolle Rückfallposition gewählt. Diese Überlegungen sind entsprechend anwendbar auf Szenarien, in welchen die jeweilige Bearbeitungsanlage zwei oder mehr verschiedene Rohmaterialien bzw. Zwischenprodukte bearbeiten kann und die oben erläuterten Kombinationen von Zwischenprodukten gebildet werden können.

In einem weiteren Verfahrensschritt wird die bestimmte Bearbeitungsmaschine nun zum entsprechenden Betrieb veranlasst. Die bestimmte Bearbeitungsmaschine kann dabei vorab vorgegeben bzw. ausgewählt werden, wobei auch mehrere der Bearbeitungsmaschinen vorgegeben bzw. ausgewählt werden können. Der Bearbeitungsschritt wird nun während des vorgebbaren Zeitintervalls gemäß der ermittelten kombinierten Bearbeitungsmenge durch die bestimmte Bearbeitungsanlage durchgeführt bzw. es wird veranlasst, dass die bestimmte Bearbeitungsanlage den Bearbeitungsschritt während des vorgebbaren Zeitintervalls gemäß der ermittelten kombinierten Bearbeitungsmenge durchführt. Bspw. kann der Bearbeitungsschritt dabei durch lediglich eine der zumindest zwei Bearbeitungsanlagen, also bspw. bei genau zwei Bearbeitungsanlagen entweder durch die Produktionsanlage oder durch die Transportanlage durchgeführt werden. Alternativ kann ein jeweiliger Bearbeitungsschritt gemäß der jeweils ermittelten kombinierten Bearbeitungsmenge durch die jeweilige Bearbeitungsanlage durchgeführt werden, also bspw. bei genau zwei Bearbeitungsanlagen: die Produktionsanlage führt während des vorgebbaren Zeitintervalls den Herstellungsschritt gemäß der ermittelten Herstellungsmenge durch, und die Transportanlage führt während des vorgebbaren Zeitintervalls den Transportschritt gemäß der ermittelten Transportmenge durch. Dieses Vorgehen lässt sich auf drei oder mehr Bearbeitungsanlagen entsprechend erweitern, wobei die entsprechende ermittelte kombinierte Bearbeitungsmenge von einem, zwei oder mehr Bearbeitungsschritten entsprechend ermittelt werden können und der entsprechende Bearbeitungsschritt bzw. die entsprechenden Bearbeitungsschritte durch die entsprechende(n) Bearbeitungsanlage(n) entsprechend durchgeführt werden kann bzw. können.

Beispielsweise kann der jeweilige Ermittlungsschritt insb. inklusive der Simulation durch die jeweilige Bearbeitungsanlage bzw. einer von der Bearbeitungsanlage umfassten Berechnungskomponente vorgenommen werden, bspw. auch die Ermittlung der Verfügbarkeit der jeweiligen Rohmaterialien und der jeweiligen Bearbeitungskapazität lokal an und durch die jeweilige Bearbeitungsanlage. Wenn die Verfügbarkeit der jeweiligen Rohmaterialien und der jeweiligen Bearbeitungskapazität ermittelt wurde bzw. vorliegt, kann jedoch die Ermittlung der kombinierten, bearbeitbaren Menge oder die Ermittlung der kombinierten Bearbeitungsmenge auch durch eine andere der Bearbeitungsanlagen oder ein IT-System durchgeführt werden. Vorzugsweise sind die Bearbeitungsanlagen des Netzwerks dabei datentechnisch miteinander verbunden, sodass eine Kommunikation zwischen den Bearbeitungsanlagen ermöglicht wird. Die datentechnische Verbindung kann bspw. paarweise entlang der Reihenfolge der Bearbeitungsschritte erfolgen oder derart, dass mehrere oder alle der Bearbeitungsanlage miteinander verbunden sind. Alternativ oder zusätzlich können die Bearbeitungsanlagen mit dem erwähnten IT-System datentechnisch verbunden sein.

Insbesondere kann die bestimmte Bearbeitungsanlage bzw. die von der bestimmten Bearbeitungsanlage umfasste Berechnungskomponente, welche den jeweiligen Bearbeitungsschritt während des vorgebbaren Zeitintervalls gemäß der ermittelten kombinierten Bearbeitungsmenge durchführt, einen oder mehrere der erläuterten Ermittlungsschritte durchführen. Alternativ oder zusätzlich kann das IT-System, wenn diese einen oder mehrere der erläuterten Ermittlungsschritte durchführt, die Ergebnisse der erläuterten Ermittlungsschritte an diese Bearbeitungsanlage übermitteln.

Der Datenaustausch findet dabei vorzugsweise dezentral über ein Netzwerk statt. Dabei kann das OneUp/OneDown-Prinzip und somit das Prinzip der Datensouveränität eingehalten werden. Gemäß dem OneUp/OneDown-Prinzip ist eine der Bearbeitungsanlagen nur mit in der Bearbeitungskette direkt benachbarten Bearbeitungsanlagen datentechnisch im Austausch. Außerdem kann die vorgeschlagene Lösung unabhängig von der Bearbeitungsart, d.h. Herstellung/Produktion oder Transport/Logistik, eine einzige Software-Applikation zur Steuerung und Kommunikation vorsehen, die die unterschiedlichen Bearbeitungsanlagen bzw. Betriebe, sowie deren unterschiedliche Digitalisierungsgrade ausgleicht und die Teilnahme in dem Netzwerk jeder Bearbeitungsanlage bzw. jedem Betrieb ermöglicht.

Bei einigen Beispielen werden bei der Ermittlung der kombinierten, bearbeitbaren Menge zumindest zwei, vorzugsweise drei und mehr aufeinander folgende Herstellungsschritte berücksichtigt. Dabei können die aufeinander folgenden Herstellungsschritte teils jener Produktionsanlage vorgelagert und teils jener Produktionsanlage nachgelagert, welche den jeweiligen Bearbeitungsschritt bei der Herstellung des jeweiligen Produkts während des vorgebbaren Zeitintervalls gemäß der ermittelten kombinierten Bearbeitungsmenge durchführt.

Von besonderem Vorteil bei dem vorgeschlagenen Verfahren ist unter anderem, dass zwei oder mehr Bearbeitungsschritte bzw. Bearbeitungsanlagen gemeinsam und insbesondere während des vorgebbaren Zeitintervalls betrachtet werden. Dank der damit ermittelten kombinierten Bearbeitungsmenge gelingt es, einen besonders optimierten Bearbeitungsschritt zu ermitteln und durch die entsprechende Bearbeitungsanlage durchführen zu lassen. Beispielsweise veranlasst das oben erwähnte IT-System oder alternativ eine der Bearbeitungsanlagen, die Durchführung des besonders optimierten Bearbeitungsschrittes durch die entsprechende Bearbeitungsanlage. Vorzugsweise veranlasst insbesondere jene Bearbeitungsanlage, welche die erläuterten Ermittlungsschritte durchgeführt hat, dabei selbst die Durchführung des besonders optimierten Bearbeitungsschrittes durch diese entsprechende Bearbeitungsanlage.

Und dies wiederum ermöglicht bei der vorgeschlagenen Herstellung des jeweiligen Produkts, Ressourcen zu schonen während dabei oftmals die Produktivität und die Effizienz gesteigert werden können.

Unter anderem zeichnet sich das vorgeschlagene Verfahren dadurch aus, dass die aktuelle und insbesondere auch die zukünftige Auftragslast und Bearbeitungskapazität der Bearbeitungsanlagen ermittelt und berücksichtigt werden können. Prinzipiell können dabei vorgelagerte Bearbeitungsschritte und/oder nachgelagerte Bearbeitungsschritte berücksichtigt werden. Mithilfe der erläuterten Ermittlungsschritte, von welchen einer insb. mithilfe von Simulationen durchgeführt werden kann, können Abläufe im Voraus kontrolliert und auf ihre Richtigkeit überprüft werden. Durch die zuvor erwähnte datentechnische Verknüpfung der Bearbeitungsanlagen, welche praktisch eine Lieferkette darstellen können, können auch relevante Information ausgetauscht werden. Das führt dazu, dass eine Betrachtung sowie Vorhersagen für die komplette Lieferkette ermöglicht werden. Durch die Betrachtung der Geschehnisse in der Produktionsanlage bzw. Fabrik, bspw. durch eine Produktionssimulation, und die Berechnungen auf den Transportwegen, bspw. durch eine Logistiksimulation, können hier frühzeitige Aussagen über die Lieferfähigkeit getroffen und Gegenmaßnahmen überprüft und in Form des erläuterten besonders optimierten Bearbeitungsschrittes durch die entsprechende Bearbeitungsanlage umgesetzt werden. Die jeweilige Auftragslast kann bspw. einer beauftragten Menge entsprechen, welche die jeweilige Bearbeitungsanlage transportieren bzw. herstellen soll. Somit können einzelne Bearbeitungsanlagen bzw. einzelne Firmen, welche die Bearbeitungsanlagen betreiben, ihre Aufträge und entsprechende Lieferverträge besser einhalten, wodurch insgesamt auch die Herstellung des jeweiligen Produkts durch die Kette bzw. das Netzwerk an Bearbeitungsanlagen verbessert werden kann. Insgesamt können somit die Liefertreue bzw. ein Service Level, d.h. bspw. die Pünktlichkeit und Zuverlässigkeit beim Transport bzw. der Produktion, verbessert werden.

Insbesondere ist dabei vorgesehen, dass die jeweilige, kombinierte Bearbeitungsmenge von zumindest zwei der Bearbeitungsanlagen ermittelt wird. Der entsprechende optimierte Bearbeitungsschritt einer der Bearbeitungsanlagen setzt dann insbesondere auf dem entsprechenden, optimierten Bearbeitungsschritt einer oder mehrerer der anderen Bearbeitungsanlagen des Netzwerkes auf und verarbeitet diesen. Beispielsweise kann also die erwähnte Transport- bzw. Logistiksimulation direkt auf den Simulationsergebnissen der Produktionsanlagen aufsetzen und diese verarbeiten. Analog können die Ergebnisse der Transport- bzw. Logistiksimulation der nächsten Stufe in der Supply Chain weitergegeben werden. Das dadurch entstehende kollaborative Bearbeitungs- bzw. Simulationsmodel wird nun vollständig und wesentlich aussagekräftiger.

Bei dem vorgeschlagenen Verfahren sollte auch gewürdigt werden, dass nicht nur unterschiedliche Arten von Bearbeitungsanlagen bzw. Bearbeitungsschritten integriert werden können, sondern damit auch unterschiedliche Firmen bzw. Unternehmen, welche bspw. lediglich eine der Bearbeitungsanlagen, lediglich einen der Bearbeitungsschritte oder lediglich eine entsprechende Simulation bereitstellen bzw. durchführen. Wie bereits oben erwähnt, kann damit eine "kollaborative Simulation" entstehen durch Beteilung mehrerer Simulationen bzw. Simulations-Systeme für die einzelnen Bearbeitungsanlagen bzw. teilnehmenden Unternehmen des Netzwerks. Damit kann ein Austausch von Simulationsergebnissen über die komplette Bearbeitungskette bzw. Supply-Chain erreicht werden, wodurch ein verteiltes Simulationsmodel gebaut werden kann. Damit hilft das vorgeschlagene Verfahren, eine heterogene Kette an Bearbeitungsschritten bzw. ein heterogenes Netzwerk von Bearbeitungsanlagen vorteilhaft derart miteinander zu vernetzen, dass insb. eine höhere Produktivität und eine höhere Effizienz erreicht werden können.

Bei einer vorteilhaften Ausgestaltung der Erfindung umfasst das vorgeschlagene Verfahren weiterhin die Verfahrensschritte:
- Bereitstellen von zumindest einem ersten und einem zweiten Managementmodul und von zumindest einem ersten und einem zweiten Simulationsmodul,
   wobei das erste Simulationsmodul zur Durchführung der ersten Simulation der bestimmten Bearbeitungsanlage und das zweite Simulationsmodul zur Durchführung der zweiten Simulation jener Bearbeitungsanlage vorgesehen ist, die der bestimmten Bearbeitungsanlage vorgelagert und/oder nachgelagert ist, und
   wobei das erste Managementmodul zur Speicherung der ersten Ergebnisses der ersten Simulation und das zweite Managementmodul zur Speicherung der zweiten Ergebnisses der zweiten Simulation vorgesehen ist;
- Übermitteln einer ersten Anfrage bzgl. der zweiten Ergebnisse von dem ersten Managementmodul an das zweite Managementmodul;
- Übermitteln der zweiten Ergebnisse von dem zweiten Managementmodul an das erste Managementmodul nach Abschluss der zweiten Simulation und nach Übermittlung der zweiten Ergebnisse von dem zweiten Simulationsmodul an das zweite Managementmodul;
- Übermitteln der zweiten Ergebnisse und einer zweiten Anfrage bzgl. der ersten Ergebnisse von dem ersten Managementmodul an das erste Simulationsmodul;
- Übermitteln der ersten Ergebnisse von dem ersten Simulationsmodul an das erste Managementmodul.

Vorzugsweise werden das jeweilige Managementmodul und das jeweilige Simulationsmodul von der jeweiligen Bearbeitungsanlage umfasst, d.h. bspw., dass das erste Managementmodul und das erste Simulationsmodul von einer der Produktionsanlagen umfasst sind und dass das zweite Managementmodul und das zweite Simulationsmodul von jener der Transportanlagen umfasst sind, welche der zuvor genannten Produktionsanlage vorgelagert ist. Insbesondere können dabei das erste Managementmodul und das erste Simulationsmodul von der Berechnungskomponente einer der Produktionsanlagen umfasst sein und dass das zweite Managementmodul und das zweite Simulationsmodul von der Berechnungskomponente jener der Transportanlagen umfasst sein, welche der zuvor genannten Produktionsanlage vorgelagert ist. Dabei kann diese zuvor genannte Produktionsanlage bspw. die oben erläuterte bestimmte Produktionsanlage sein, welche den jeweiligen Bearbeitungsschritt bei der Herstellung des jeweiligen Produkts während des vorgebbaren Zeitintervalls gemäß der ermittelten kombinierten Bearbeitungsmenge durchführt.

Bspw. kann die jeweilige Bearbeitungsanlage einen Prozessor und einen Speicher aufweisen, welche für die Funktionalitäten des jeweiligen Managementmoduls und des jeweiligen Simulationsmoduls eingerichtet sind. Alternativ oder zusätzlich umfasst das Managementmodul zumindest einen Prozessor und einen Datenspeicher bzw. kann auf diese zugreifen, wenn diese von der jeweiligen, zugeordneten Bearbeitungsanlage umfasst sind, wobei die Ergebnisse der jeweiligen Simulation durch den Prozessor in dem Datenspeicher abgelegt werden können. Darüber hinaus kümmert sich das jeweilige Managementmodul um den Datenaustausch mit dem jeweiligen Simulationsmodul und führt dem jeweiligen Simulationsmodul entsprechende Anfragen zur Durchführung der jeweiligen Simulation sowie ggf. weitere Daten zu. Durch das Übermitteln der Anfrage von dem Managementmodul an das Simulationsmodul kann das Simulationsmodul angestoßen werden, die entsprechende Simulation durchzuführen und deren Ergebnisse wieder an das Managementmodul zurückzusenden. In diesem Sinne kann das Managementmodul auch als eine Art Simulations-Manager verstanden werden. Weiterhin ist das jeweilige Managementmodul mit anderen, vorzugsweise benachbarten Managementmodulen (d.h. mit Managementmodulen, die direkt vorgelagerten und/oder nachgelagerten Bearbeitungsanlagen zugeordnet sind), datentechnisch verbunden, sodass Anfragen bezüglich Simulationen bzw. deren Ergebnisse auch an benachbarte Bearbeitungsanlagen bzw. deren Managementmodule übermittelt werden können.

Insbesondere für die Ermittlung der jeweiligen kombinierten, bearbeitbaren Menge einer der Bearbeitungsanlagen kann das zugehörige erste Managementmodul eine entsprechende (zweite) Anfrage zur Durchführung der Simulation dieser bestimmten Bearbeitungsanlage an das erste Simulationsmodul dieser Bearbeitungsanlage übermitteln. Zeitgleich oder zuvor kann das erste Managementmodul eine (erste) Anfrage an das benachbarte, zweite Managementmodul übermitteln, welches zu einer vorgelagerten und/oder nachgelagerten Bearbeitungsanlage gehört. Durch diese zweite Anfrage werden zweite Ergebnisse von dem zweiten Managementmodul angefragt, welche das zweite Simulationsmodul erzeugt hat, mittels welchem die zugeordnete vor- bzw. nachgelagerte Bearbeitungsanlage simuliert werden kann. In manchen Beispielen kann dabei die zweite Anfrage die genannte zweite Simulation auch veranlassen. Sind die zweiten Ergebnisse in dem zweiten Managementmodul verfügbar, übermittelt das zweite Managementmodul diese zweiten Ergebnisse an das erste Managementmodul. Das erste Managementmodul kann daraufhin diese zweiten Ergebnisse an das erste Simulationsmodul übermitteln, welches diese zweiten Ergebnisse als Eingangsgrößen (neben anderen) zur Durchführung der ersten Simulation der bestimmten Bearbeitungsanlage verwenden kann. Nachdem das erste Simulationsmodul die erste Simulation durchgeführt hat, übermittelt das erste Simulationsmodul die entsprechenden, ersten Ergebnisse an das erste Managementmodul.

Die jeweiligen Ergebnisse umfassen dabei vorzugsweise die jeweilige kombinierte, bearbeitbare Menge der jeweiligen Bearbeitungsanlage. Da die jeweilige kombinierte, bearbeitbare Menge insb. von der entsprechenden kombinierten, bearbeitbaren Menge der vorgelagerten bzw. nachgelagerten Bearbeitungsanlage abhängen kann, ermöglicht diese Ausgestaltung die Berücksichtigung von komplexeren Zusammenhängen bei der Herstellung des jeweiligen Produkts. Insbesondere kann das vorgeschlagene Miteinbeziehen der jeweils vorgelagerten bzw. nachgelagerten Bearbeitungsanlagen iterativ bzw. wiederholt vorgenommen werden, sodass eine ganze Kette von Bearbeitungsschritten und Bearbeitungsanlagen berücksichtigt werden kann, insb. um die kombinierte, bearbeitbare Menge jener Bearbeitungsanlage zu ermitteln, welche den jeweiligen Bearbeitungsschritt bei der Herstellung des jeweiligen Produkts während des vorgebbaren Zeitintervalls gemäß der ermittelten kombinierten Bearbeitungsmenge durchführt. Vorzugsweise werden dabei iterativ bzw. schrittweise die jeweils vorgelagerten Bearbeitungsanlagen bzw. Bearbeitungsschritte mit einbezogen, wobei bspw. drei, vier oder sogar mehr solcher vorgelagert habe Bearbeitungsanlagen bzw. Bearbeitungsschritte mit einbezogen werden können. Somit können beispielsweise für die Ermittlung der kombinierten, bearbeitbaren Menge dieser Bearbeitungsanlage (welche den jeweiligen Bearbeitungsschritt bei der Herstellung des jeweiligen Produkts während des vorgebbaren Zeitintervalls gemäß der ermittelten kombinierten Bearbeitungsmenge durchführt) die vorgelagerten Bearbeitungsanlagen simuliert werden, wobei die entsprechenden Ergebnisse vom Anfang der Kette jeweils eine Bearbeitungsanlage weiter nach hinten weitergegeben werden, wo sie in die entsprechende Simulation einfließen, bis schließlich die Ergebnisse der letzten Simulation dieser Kette die kombinierten, bearbeitbaren Menge dieser Bearbeitungsanlage umfassen.

Von besonderem Vorteil ist dabei, dass sich die verschiedenen Simulationen auf eine oder mehrere Transportanlagen und eine oder mehrere Produktionsanlagen beziehen. Vorzugsweise kann den entsprechenden Simulationsmodulen dennoch stets dasselbe Format an Ergebnisdaten zugeführt werden bzw. kann stets dasselbe Format an Ergebnisdaten von den entsprechenden Simulationsmodulen erhalten werden. Dies wird unter anderem dadurch erreicht, dass die kombinierten, bearbeitbaren Mengen und ggf. weitere Ergebnisdaten agnostisch bezüglich der Art der entsprechenden Bearbeitungsanlagen sind, d. h. bspw. nicht spezifisch lediglich auf Transportanlagen bzw. Transportschritte oder Produktionsanlagen bzw. Herstellungsschritte anwendbar sind.

Manchmal wird im Zusammenhang der Kommunikation zwischen zwei benachbarten Managementmodulen von einer horizontalen Kommunikation gesprochen, da sich diese Managementmodule auf derselben Ebene befinden. Die Kommunikation zwischen einem Managementmodul und dem zugeordneten Simulationsmodul kann entsprechend als vertikale Kommunikation angesehen werden, da sich die beiden Module auf unterschiedlichen Ebenen innerhalb einer Bearbeitungsanlage befinden.

In manchen Beispielen wird das Managementmodul von dem oben erwähnten IT-System umfasst, welches datentechnisch mit den Bearbeitungsanlagen des Netzwerks verbunden ist.

Bei einer weiteren vorteilhaften Ausgestaltung der Erfindung verwendet dabei ein drittes der Simulationsmodule ein erstes Datenformat, welches mit einem zweiten Datenformat eines vierten der Simulationsmodule nicht kompatibel ist, wobei das dritte Simulationsmodul eine Daten-Schnittstelle zum Senden und Empfangen von Daten von/zu dem jeweiligen Managementmodul aufweist, und wobei die Daten-Schnittstelle eine Umsetzung des ersten Datenformats in das zweite Datenformat und umgekehrt ermöglicht.

Wie oben bereits erwähnt, kann mittels des vorgeschlagenen Verfahrens eine heterogene Kette an Bearbeitungsschritten bzw. ein heterogenes Netzwerk von Bearbeitungsanlagen vorteilhaft miteinander vernetzt werden. Insbesondere wenn dabei Simulationsmodule für entsprechende Bearbeitungsanlagen datentechnisch inkompatibel zueinander sind, ist die erwähnte Daten-Schnittstelle vorgesehen. Mittels der Daten-Schnittstelle kann bei dem inkompatiblen Simulationsmodul, bspw. bei dem dritten Simulationsmodul, eine Umsetzung der Daten, insb. der Ergebnisse der jeweiligen Simulation bzw. jeweiligen der kombinierten, bearbeitbaren Menge, von dem inkompatiblen ersten Datenformat in das kompatible zweite Datenformat bzw. umgekehrt vorgenommen werden.

Bspw. kann das dritte Simulationsmodul dem oben erläuterten ersten bzw. zweiten Simulationsmodul entsprechen und das vierte Simulationsmodul dem zweiten bzw. ersten Simulationsmodul. In manchen Beispielen wird die Daten-Schnittstelle von dem entsprechenden Managementmodul umfasst.

Bei einer weiteren vorteilhaften Ausgestaltung der Erfindung umfassen die jeweiligen Ergebnisse dabei zumindest die jeweilige, kombinierte, bearbeitbare Menge und optional die jeweilige, kombinierte Zielmenge und weiter optional die jeweilige kombinierte Bearbeitungsmenge.

Die genannten Mengen beschreiben dabei bezüglich der Rohmaterialien bzw. bezüglich der Zwischenprodukte im Wesentlichen was, wie viel, wann und wo bearbeitet werden kann bzw. bearbeitet werden soll. In manchen Beispielen kann dabei die kombinierte Zielmenge durch die jeweilige Bearbeitungsanlage bzw. von anderen Systemen bereitgestellt werden, anschließend durch die entsprechende Simulation verwendet werden und dann zusammen mit den übrigen Ergebnissen der Simulation von dem entsprechenden Simulationsmodul an das Managementmodul gesendet werden. Alternativ kann die kombinierte Zielmenge auch von dem Managementmodul an das jeweilige Simulationsmodul gesendet werden. Insbesondere können die jeweilige, kombinierte Zielmenge oder die jeweilige kombinierte Bearbeitungsmenge einer anderen der Bearbeitungsanlagen von dem Managementmodul an das jeweilige Simulationsmodul gesendet werden, bspw., um bei der Simulation dieser Bearbeitungsanlage Informationen der in der Kette benachbarten Bearbeitungsanlagen zu berücksichtigen.

Die genannten Ergebnisse sind dabei sowohl auf eine Transportanlage als auch auf einer Produktionsanlage anwendbar und somit bezüglich der Art der Bearbeitungsanlage agnostisch.

Bei einer vorteilhaften Ausgestaltung der Erfindung wird bzw. werden der jeweiligen Simulation eine der folgenden Eingangsgrößen oder eine Kombination der folgenden Eingangsgrößen zugeführt: das vorgebbare Zeitintervall, ein Produkt-Kenner, ein Bearbeitungs-Kenner, ein Bearbeitungs-Startort, ein Bearbeitungs-Zielort, ein Bearbeitungs-Startzeitpunkt, ein Bearbeitungs-Zielzeitpunkt, eine Anzahl, ein Gewicht und eine räumliche Größe der jeweiligen Rohmaterialien sowie die ermittelte Verfügbarkeit der jeweiligen Rohmaterialien und die ermittelte Verfügbarkeit der jeweiligen Bearbeitungskapazität der jeweiligen Bearbeitungsanlage.

Der Produkt-Kenner kann bspw. eine alphanumerische Zeichenabfolge sein, welche eindeutig und individuell einem jeweiligen einzelnen Stück des jeweiligen Produktes bzw. auch Zwischenproduktes bzw. Rohmaterials zugeordnet werden kann. Entsprechend kann der Bearbeitungs-Kenner bspw. ebenfalls eine alphanumerische Zeichenabfolge sein, welche eindeutig und individuell einem der jeweiligen Bearbeitungsschritte bspw. inklusive Informationen bezüglich der Bearbeitungsanlage etc. zugeordnet werden kann. Bspw. kann der Bearbeitungs-Kenner auch als Auftragskenner verwendet werden, mittels welchem insb. ein Bearbeitungsauftrag eindeutig nachverfolgt werden kann.

Der Bearbeitungs-Startort bzw. der Bearbeitungs-Zielort gibt bspw. an, wo der jeweilige Bearbeitungsschritt durch die jeweilige Bearbeitungsanlage startet bzw. endet, was insbesondere bei Transportschritten von Interesse ist. Entsprechend gibt der Bearbeitungs-Startzeitpunkt bzw. der Bearbeitungs-Zielzeitpunkt an, wann der jeweilige Bearbeitungsschritt durch die jeweilige Bearbeitungsanlage startet bzw. endet. Dabei können die Informationen zum Bearbeitungs-Startort und -Zielort sowie zum Bearbeitungs-Startzeitpunkt und - Zielzeitpunkt bspw. für entsprechende Bearbeitungsaufträge zur Planung der Bearbeitung und/oder zur Dokumentation der bereits erfolgten Bearbeitung verwendet werden.

Die Anzahl, das Gewicht und die räumliche Größe der jeweiligen Rohmaterialien, welche ja wie oben bereits erläutert auch das jeweilige Zwischenprodukt bzw. am Ende der Bearbeitungsschritte das jeweilige Produkt sein können, können insbesondere für die Handhabung oder auch Zwischenlagerung der jeweiligen Rohmaterialien relevant sein. Dabei kann sich die Anzahl eher auf die diskrete Fertigung von einzelnen Stücken beziehen und die räumliche Größe eher auf Volumina von Gasen oder Flüssigkeiten bei der Prozessindustrie.

Daneben können noch weitere Eingangsgrößen verwendet werden, zum Beispiel die Information, ob es sich bei dem jeweiligen Rohmaterial um Gefahrgut handelt, welches besondere Anforderungen an eine sichere Bearbeitung mit sich bringt. Weiterhin kann dem jeweiligen Rohmaterial auch noch ein Name oder ein Material des jeweiligen Rohmaterials zugeordnet werden, welcher/s ebenfalls eine Eingangsgröße darstellen kann. Weiterhin können auch Simulationsdaten, wie z.B. welche Produktionsanlage bzw. welche/r Anwender/in bzw. welches Simulationsmodul die Simulation durchführt, der Startzeitpunkt der Simulation, etc., der Simulation als Eingangsgröße zugeführt werden.

Bspw. kann die jeweilige Eingangsgröße direkt von der jeweiligen Bearbeitungsanlage ermittelt und, insbesondere über das jeweilige, oben erläuterte Managementmodul, der jeweiligen Simulation zugeführt werden.

Weiterhin können der jeweiligen Simulation die jeweilige, kombinierte, bearbeitbare Menge und optional die jeweilige, kombinierte Zielmenge und weiter optional die jeweilige kombinierte Bearbeitungsmenge von vorgelagerten und/oder nachgelagerten Simulationen zugeführt werden, d.h. von Simulationen der vorgelagerten und/oder nachgelagerten Bearbeitungsschritte bzw. Bearbeitungsanlagen. Wie bereits erwähnt kann dieser Aspekt auch iterativ erfolgen, damit eine Kette von mehreren Bearbeitungsschritten bzw. Bearbeitungsanlagen berücksichtigt werden kann.

Dabei sollte besonders gewürdigt werden, dass die Ergebnisse der jeweiligen Simulation insbesondere das gleiche Datenformat bzw. die gleiche Datenstruktur aufweisen, wie die Eingangsgrößen bzw. Eingangsdaten, welche der Simulation zugeführt werden. Bspw. umfassen die Ergebnisse der jeweiligen Simulation somit dieselben Größen wie die Eingangsgrößen, wobei die Werte der genannten Größen durch die Simulation aktualisiert bzw. ermittelt werden. Auch deshalb sind die genannten Eingangsgrößen daher sowohl auf eine Transportanlage als auch auf eine Produktionsanlage anwendbar und somit bezüglich der Art der Bearbeitungsanlage agnostisch, d.h. unabhängig davon, ob die jeweilige Bearbeitungsanlage eine Produktionsanlage oder eine Transportanlage ist.

Bei einer vorteilhaften Ausgestaltung der Erfindung umfasst das vorgeschlagene Verfahren weiterhin die Verfahrensschritte:
- Ermitteln einer kombinierten Herstellmenge während des jeweiligen Herstellungsschrittes, wobei die kombinierte Herstellmenge möglichst mindestens einer kombinierten Herstell-Zielmenge entspricht; und
- Veranlassen der Durchführung des jeweiligen Herstellungsschritts durch die jeweilige Produktionsanlage während des vorgebbaren Zeitintervalls gemäß der ermittelten kombinierten Herstellmenge.

Bei dieser Ausgestaltung kann die kombinierte Bearbeitungsmenge somit als kombinierte Herstellmenge vorliegen, welche insbesondere die durch die jeweilige Produktionsanlage herzustellende Menge an Zwischenprodukten betrifft. Entsprechend liegt die kombinierte Zielmenge als kombinierte Herstell-Zielmenge vor. Dabei wird bei der Ermittlung der kombinierten Herstellmenge auch eine entsprechend ermittelte kombinierte bearbeitbare Menge, hier also eine kombinierte herstellbare Menge, berücksichtigt. Nach der Ermittlung der kombinierten Herstellmenge kann dann der entsprechende Herstellungsschritt durch die entsprechende Produktionsanlage gemäß der ermittelten kombinierten Herstellmenge veranlasst werden.

Beispielsweise können dabei auch die zwei oder mehr Herstellungsschritte von zwei oder mehr Produktionsanlagen berücksichtigt werden, um eine jeweilige kombinierte Herstellmenge zu ermitteln und dann entsprechende Herstellungsschritte durch die entsprechenden Produktionsanlagen gemäß der ermittelten kombinierten Herstellmengen zu veranlassen. Dies erlaubt insbesondere nicht nur bezüglich einer Produktionsanlage, Ressourcen zu schonen und dabei die Produktivität und die Effizienz zu steigern, sondern diese Optimierungspotentiale entlang der Kette von Bearbeitungsschritten zu heben.

Bei einer weiteren vorteilhaften Ausgestaltung der Erfindung umfasst das vorgeschlagene Verfahren weiterhin die Verfahrensschritte:
- Ermitteln einer kombinierten Transportmenge während des vorgebbaren Zeitintervalls, insb. von der Produktionsanlage des vorhergehenden Herstellungsschrittes, mittels der jeweiligen Transportanlage zur Produktionsanlage des nachfolgenden Herstellungsschrittes, wobei die kombinierte Transportmenge möglichst mindestens einer kombinierten Transport-Zielmenge entspricht; und
- Veranlassen der Durchführung des jeweiligen Transportschritts, insb. von der Produktionsanlage des vorhergehenden Herstellungsschrittes, mittels der jeweiligen Transportanlage zur Produktionsanlage des nachfolgenden Herstellungsschrittes während des vorgebbaren Zeitintervalls gemäß der ermittelten kombinierten Transportmenge.

Bei dieser Ausgestaltung kann die kombinierte Bearbeitungsmenge somit als kombinierte Transportmenge vorliegen, welche insbesondere die durch die jeweilige Transportanlage zu transportierende Menge an Rohmaterialien, ggf. inkl. Zwischenprodukten, betrifft. Entsprechend liegt die kombinierte Zielmenge als kombinierte Transport-Zielmenge vor. Dabei wird bei der Ermittlung der kombinierten Transportmenge auch eine entsprechend ermittelte kombinierte bearbeitbare Menge, hier also eine kombinierte transportierbare Menge, berücksichtigt. Nach der Ermittlung der kombinierten Transportmenge kann dann der entsprechende Transportschritt durch die entsprechende Transportanlage gemäß der ermittelten kombinierten Transportmenge veranlasst werden.

Beispielsweise können dabei auch die zwei oder mehr Transportschritte von zwei oder mehr Transportanlagen berücksichtigt werden, um eine jeweilige kombinierte Transportmenge zu ermitteln und dann entsprechende Transportschritte durch die entsprechenden Transportanlagen gemäß der ermittelten kombinierten Transportmengen zu veranlassen. Dies erlaubt insbesondere nicht nur bezüglich einer Transportanlage, Ressourcen zu schonen und dabei die Produktivität und die Effizienz zu steigern, sondern diese Optimierungspotentiale entlang der Kette von Bearbeitungsschritten zu heben. Dies trifft besonders zu, wenn neben zwei oder mehr Transportschritten zusätzlich zumindest ein, vorzugsweise zwei oder mehr Herstellungsschritte berücksichtigt werden.

Bei einer weiteren vorteilhaften Ausgestaltung der Erfindung werden zumindest zwei verschiedene Produkte bearbeitet, wobei bei der Ermittlung der kombinierten Bearbeitungsmenge der jeweiligen Rohmaterialien der zumindest zwei Produkte für das vorgebbare Zeitintervall eine Priorisierung vorgenommen wird, und wobei die Priorisierung dergestalt ist, dass zumindest eines der Produkte höher gewichtet ist als zumindest ein weiteres der Produkte.

Die vorgeschlagene Priorisierung ermöglicht, bspw. ein wertvolleres oder eiligeres Produkt vorrangig zu bearbeiten, indem man das entsprechende Produkt höher als andere, weniger wertvolle oder weniger eilige Produkte gewichtet. Diese Ausgestaltung ist bei zwei oder mehr Produkten besonders vorteilhaft, wenn bspw. die jeweilige Bearbeitungskapazität oder die Verfügbarkeit der jeweiligen Rohmaterialien eingeschränkt ist, sodass die die kombinierte bearbeitbare Menge kleiner als die kombinierte Zielmenge ist und dies insbesondere auf zwei oder mehr der Produkte zutrifft. In solchen Szenarien kann die verfügbare Bearbeitungskapazität bzw. die verfügbaren Rohmaterialien vorrangig für die Bearbeitung des höher priorisierten Produkts verwendet werden, wodurch trotz der Einschränkungen noch akzeptable Resultate bei der Herstellung des Produkts erzielt werden können. Die vorgeschlagene Priorisierung bietet insbesondere bei den jeweiligen Herstellungsschritten Vorteile.

Bei dem obigen Beispiel, bei welchem eine Produktionsanlage zwei verschiedene Zwischenprodukte herstellen kann, kann bspw. der folgende Engpass bei der Bearbeitungskapazität vorliegen: die Produktionsanlage kann in dem vorgebbaren Zeitintervall nach wie vor die folgenden Anzahlen an ersten Zwischenprodukten ZP1 und zweiten Zwischenprodukten ZP2 herstellen: 9i*ZP1 + (10-i)*ZP2 gilt, mit i E [0; 10]. Allerdings beträgt die Zielmenge in dem vorgebbaren Zeitintervall 50 erste Zwischenprodukte ZP1 und 50 zweite Zwischenprodukte ZP2. Ohne Priorisierung, d.h. mit einer Gleichgewichtung der beiden Zwischenprodukte ZP1 und ZP2 könnte die Produktionsanlage bspw. ein erstes Zwischenprodukt ZP1 und ein zweites Zwischenprodukt ZP2 herstellen, d.h. die gleiche Anzahl an ersten Zwischenprodukten ZP1 und zweiten Zwischenprodukten ZP2. Ist das erste Zwischenprodukt ZP1 höher priorisiert, könnte die Produktionsanlage immerhin 45 erste Zwischenprodukte ZP1 (und keine zweiten Zwischenprodukte ZP2) herstellen und somit den Teil der Zielmenge für das erste Zwischenprodukt ZP1 noch bestmöglich erfüllen.

Auch wenn keine Einschränkungen vorliegen, kann die vorgeschlagene Priorisierung verwendet werden, bspw. um ein wertvolleres oder üblicherweise eiligeres Produkt innerhalb der Grenzen der kombinierten, bearbeitbaren Menge zusätzlich zu der Zielmenge zu bearbeiten und anschließend bspw. einzulagern. In solchen Szenarien kann die Priorisierung also insbesondere erst dann wirksam werden, wenn die kombinierte Zielmenge bereits erreicht wird und sich die Priorisierung erst bei über die kombinierte Zielmenge hinausgehenden Mengen auswirkt. Bspw. kann die eingelagerte, zusätzliche Menge des Produkts später dynamisch wieder in die Abfolge der Bearbeitungsschritte aufgenommen werden, was damit ermöglicht, zukünftige Flaschenhälse bei der Herstellung des Produkts abzumildern oder zu vermeiden.

Bei einer weiteren vorteilhaften Ausgestaltung der Erfindung ist die kombinierte Bearbeitungsmenge größer als die kombinierte Zielmenge und höchstens gleich der kombinierten, bearbeitbaren Menge.

Aus Gründen einer erhöhten Auslastung der jeweiligen Bearbeitungsanlage kann die kombinierte Bearbeitungsmenge auch höher gewählt werden als die kombinierte Zielmenge, was vor allem bei dem jeweiligen Herstellungsschritt sinnvoll ist. Für diesen Fall kann diejenige Menge an hergestellten Zwischenprodukten bspw. eingelagert werden, welche über die kombinierte Zielmenge hinausgeht, wie bereits oben erläutert. Bei der Bestimmung der derart erhöhten kombinierten Bearbeitungsmenge sind jedoch die Grenzen der kombinierten bearbeitbaren Menge zu beachten. Dabei bietet die vorgeschlagene Erhöhung der kombinierten Bearbeitungsmenge insbesondere bei den jeweiligen Herstellungsschritten Vorteile.

Bei einer weiteren vorteilhaften Ausgestaltung der Erfindung wird eine Anpassung der jeweiligen Transportkapazität verlasst, falls die jeweilige Transportkapazität verursacht, dass die ermittelte, kombinierte bearbeitbare Menge des jeweiligen Produkts für das vorgebbare Zeitintervall um mehr als einen vorgebbaren ersten Schwellwert von der kombinierten Zielmenge abweicht.

Die Abweichung der ermittelten, kombinierten bearbeitbaren Menge von der kombinierten Zielmenge kann dabei derart sein, dass die kombinierte bearbeitbare Menge zu klein oder zu groß ist. Dabei kann die Abweichung daher rühren, dass ein Flaschenhals bei dem jeweiligen Transportschritt vorliegt oder dass die jeweilige Transportanlage überdimensioniert ist. Vorzugsweise wirkt die vorgeschlagene Anpassung der Transportkapazität der erwähnten Abweichung entgegen, sodass die kombinierte bearbeitbare Menge besser der kombinierten Zielmenge entspricht, d.h. dass die beiden Größen gleich groß sind oder innerhalb akzeptabler Grenzen voneinander abweichen.

Die Anpassung der jeweiligen Transportkapazität kann bspw. dadurch erreicht werden, dass mehr oder weniger Ausrüstung (zum Beispiel Transportfahrzeuge, Fördermittel, etc.) oder Betriebspersonal für den jeweiligen Transportschritt während des vorgebbaren Zeitintervalls vorgesehen werden. Insbesondere können bspw. Transportrouten geändert werden: bspw. kann bei geringer Auslastung der Transportkapazität ein kombinierter Transportschritt vorgesehen sein, bei welchem die Rohmaterialien von verschiedenen Transportschritten gemeinsam transportiert werden. Dies ist bspw. bei einer nicht ausgelasteten Direktverbindung der Fall, die dann durch eine Alternativroute mit Zwischenstopps ersetzt wird. Bei nicht ausreichender Transportkapazität kann umgekehrt bspw. ein bisher kombinierter Transportschritt in zwei oder mehr einzelne Transportschritte unterteilt werden.

Bei einer weiteren vorteilhaften Ausgestaltung der Erfindung wird eine Anpassung der jeweiligen Produktionskapazität verlasst, falls die jeweilige Produktionskapazität verursacht, dass die ermittelte, kombinierte bearbeitbare Menge des jeweiligen Produkts für das vorgebbare Zeitintervall um mehr als einen vorgebbaren zweiten Schwellwert von der kombinierten Zielmenge abweicht.

Wie oben bereits erläutert, kann die Abweichung der ermittelten, kombinierten bearbeitbaren Menge von der kombinierten Zielmenge dabei derart sein, dass die kombinierte bearbeitbare Menge zu klein oder zu groß ist. Dabei kann die Abweichung daher rühren, dass ein Flaschenhals bei dem jeweiligen Herstellungsschritt vorliegt, dass die jeweilige Produktionsanlage überdimensioniert ist oder dass nicht genügend zu verarbeitende Rohmaterialen verfügbar sind. Vorzugsweise wirkt die vorgeschlagene Anpassung der Produktionskapazität der erwähnten Abweichung entgegen, sodass die kombinierte bearbeitbare Menge besser der kombinierten Zielmenge entspricht, d.h. dass die beiden Größen gleich groß sind oder innerhalb akzeptabler Grenzen voneinander abweichen.

Die Anpassung der jeweiligen Produktionskapazität kann bspw. dadurch erreicht werden, dass mehr oder weniger Ausrüstung (zum Beispiel Produktionsmaschinen, Werkzeuge, etc.) oder Betriebspersonal für den jeweiligen Herstellungsschritt während des vorgebbaren Zeitintervalls vorgesehen werden. Bei einer zu hohen Produktionskapazität kann bspw. vorgesehen sein, dass demnächst anstehende Wartungs- oder Reparaturarbeiten bei der Produktionsanlage vorgezogen werden, insbesondere sofern sie innerhalb des vorgebbaren Zeitintervalls abgeschlossen werden können. Alternativ oder zusätzlich können bei einer zu niedrigen Produktionskapazität eine oder mehrere zusätzliche passende Produktionsanlagen in das Netzwerk von Bearbeitungsanlagen aufgenommen werden, sodass die Produktionskapazität des Netzwerkes insgesamt erhöht werden kann.

Bei einer weiteren vorteilhaften Ausgestaltung der Erfindung umfassen die Bearbeitungsschritte zumindest einen jeweiligen weiteren Transportschritt zum Transport der jeweiligen Rohmaterialien von einer jeweiligen Rohmaterial-Quelle zu der jeweiligen Produktionsanlage, wobei bei der Ermittlung der Verfügbarkeit der jeweiligen Transportkapazität und bei der Ermittlung der kombinierten, bearbeitbaren Menge der Transport der jeweiligen Rohmaterialien von der jeweiligen Rohmaterial-Quelle zu der jeweiligen Produktionsanlage berücksichtigt wird.

Bei einer weiteren vorteilhaften Ausgestaltung der Erfindung umfassen die Bearbeitungsschritte zumindest einen letzten Transportschritt zum Transport des jeweiligen Produkts von der jeweiligen Produktionsanlage des letzten Herstellungsschrittes zu einem finalen Lieferort, wobei bei der Ermittlung der Verfügbarkeit der jeweiligen Transportkapazität und bei der Ermittlung der kombinierten, bearbeitbaren Menge der Transport des jeweiligen Produkts von der jeweiligen Produktionsanlage des letzten Herstellungsschrittes zu dem finalen Lieferort berücksichtigt wird.

Durch die zusätzliche Berücksichtigung der jeweiligen Rohmaterial-Quelle bzw. des finalen Lieferorts und den entsprechenden, weiteren jeweiligen Transportschritt können das Netzwerk von Bearbeitungsanlagen sowie die Kette von Bearbeitungsschritten erweitert und vervollständigt werden, was eine besonders umfassende und ganzheitliche Betrachtung der Herstellung des jeweiligen Produkts erlaubt. Dadurch können bspw. Engpässe oder Flaschenhälse bei der Herstellung des jeweiligen Produkts gefunden und behoben werden, welche von dem genannten, weiteren Transportschritt herrühren. Damit trägt diese Ausgestaltung ebenfalls zur Erhöhung der Produktivität und der Effizienz der Bearbeitungsanlagen bzw. der Bearbeitungsschritte bei.

Im Folgenden wird die Erfindung anhand der in den Figuren dargestellten Ausführungsbeispiele näher beschrieben und erläutert. Es zeigen:
- FIG 1: eine schematische Darstellung eines Ausführungsbeispiels des vorgeschlagenen Systems,
- FIG 2: eine schematische Darstellung eines beispielhaften Zusammenspiels von Simulationsmodulen und Managementmodulen zur Ermittlung der kombinierten, bearbeitbaren Menge einer bestimmten Bearbeitungsanlage und
- FIG 3: eine schematische Darstellung eines Ablaufdiagramms eines Ausführungsbeispiels des vorgeschlagenen Verfahrens.

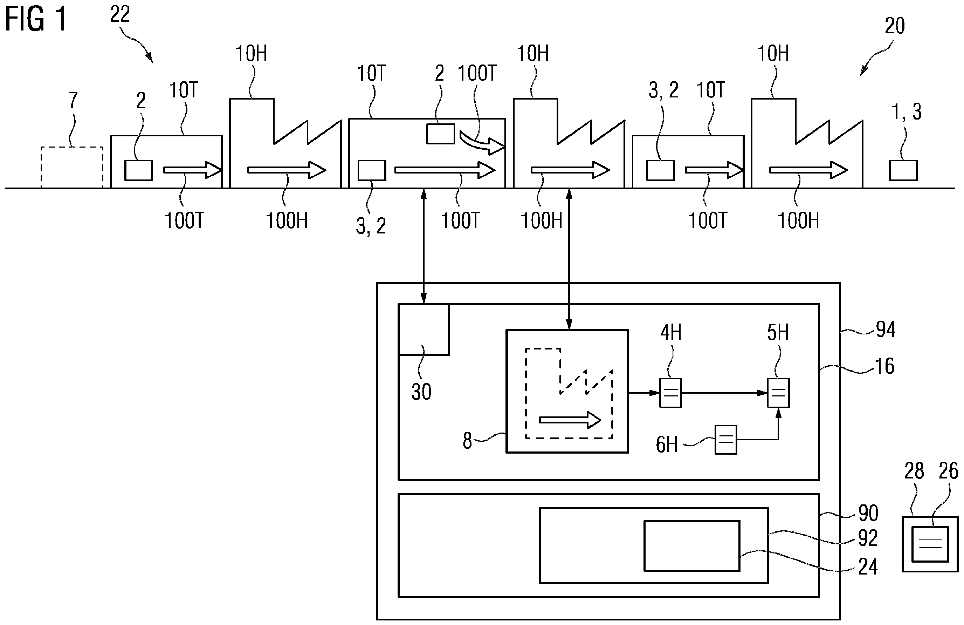

Die Figur 1 zeigt eine schematische Darstellung eines Ausführungsbeispiels des vorgeschlagenen Systems 22.

Das System 22 ist als Netzwerk 20 von Bearbeitungsanlagen 10H, 10T zur Herstellung eines Produktes 1 ausgestaltet. Dabei gehören zu dem Netzwerk 20 im Rahmen des Ausführungsbeispiels drei Transportanlagen 10T und drei Produktionsanlagen 10H. Die Herstellung des Produkts 1 umfasst dabei mehrere nacheinander ausgeführte Bearbeitungsschritte 100H, 100T: die erste Transportanlage 10T transportiert in einem Transportschritt 100T Rohmaterialien 2 an die erste Produktionsanlage 10H, welche dann in einem Herstellungsschritt 100H ein erstes Zwischenprodukt 3 herstellt. Dieses Zwischenprodukt 3 ist dabei eines von zwei Rohmaterialien 2 des darauffolgenden Herstellungsschrittes 100H, wobei diese beiden Rohmaterialien 2 von der nächsten Transportanlage 10T in einem nächsten Transportschritt 100T zur nachfolgend angeordneten Produktionsanlage 10H transportiert werden. Diese Produktionsanlage 10H stellt in einem nächsten Herstellungsschritt 100H das nächste Zwischenprodukt 3 her, welches wiederum das Rohmaterial 2 der darauffolgenden, letzten Produktionsanlage 10H des Netzwerks 20 darstellt. Dieses Rohmaterial 2 wird dabei von der nächsten Transportanlage 10T wiederum in einem nächsten Transportschritt 100T zu dieser letzten Produktionsanlage 10H transportiert. Diese letzte Produktionsanlage 10H stellt schließlich in einem letzten Herstellungsschritt 100H der Sequenz an Bearbeitungsschritten 100H, 100T das Produkt 1 her, was auch als Zwischenprodukt 3 dieser letzten Produktionsanlage 10H angesehen werden kann.

Optional kann den erläuterten Bearbeitungsanlagen 10H, 10T noch eine Rohmaterial-Quelle 7 vorgelagert werden, welche das Rohmaterial für den ersten erläuterten Transportschritt 100T bereitstellt. Derartige Rohmaterial-Quellen 7 können auch noch für weitere Rohmaterialien 2 vorgesehen sein, die im Laufe der Sequenz an Bearbeitungsschritten 100H, 100T zur Herstellung des Produkts 1 benötigt werden. Weiterhin kann die Sequenz an Bearbeitungsschritten 100H, 100T auch zumindest abschnittsweise derart eine Baumstruktur aufweisen, dass einem der Bearbeitungsschritte 100H, 100T, direkt zwei oder mehr Bearbeitungsschritte 100H, 100T vorausgehen. Im Prinzip können einem der Bearbeitungsschritte zumindest abschnittsweise auch direkt zwei oder mehr Bearbeitungsschritte 100H, 100T folgen, was insbesondere der Fall sein kann, wenn zwei oder mehr verschiedene Produkte 1 durch das Netzwerk 20 bzw. das System 22 hergestellt werden.

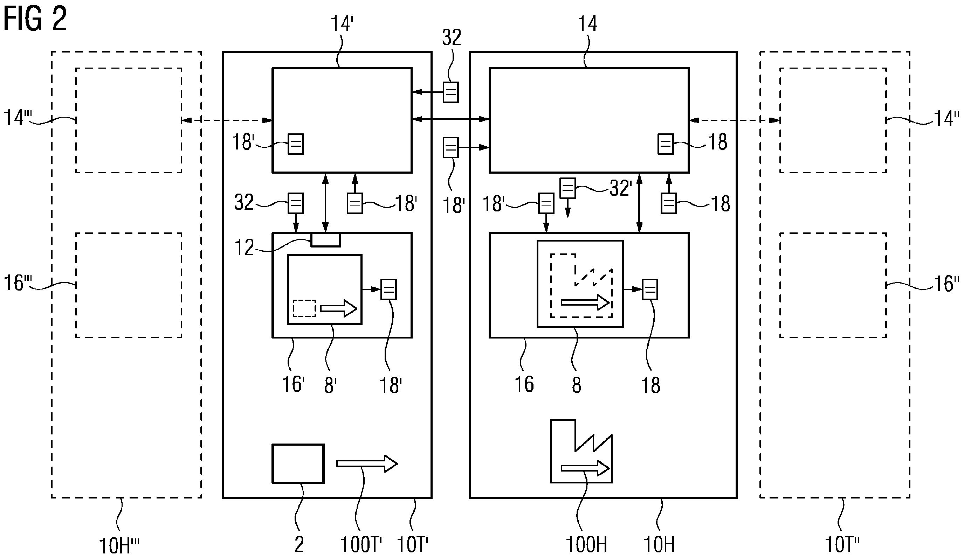

Im Rahmen des Ausführungsbeispiels umfasst die mittlere der Produktionsanlagen 10H, welche bei diesem Ausführungsbeispiel die bestimmte Bearbeitungsanlage 10H sein soll, eine Berechnungskomponente 94. Somit ist die Berechnungskomponente 94 auch Teil des Netzwerks 20 von Bearbeitungsanlagen 10H, 10T und des Systems 22. Die Berechnungskomponente 94 ist dabei mit der übrigen bestimmten Bearbeitungsanlage 10H datentechnisch verbunden sowie weiterhin mit der vorgelagerten Transportanlage 10T. Zur Kommunikation der Berechnungskomponente 94 mit jener vorgelagerten Bearbeitungsanlage 10T weist die Berechnungskomponente 94 eine Kommunikations-Schnittstelle 30 auf. Falls die Berechnungskomponente 94 nicht von der bestimmten Bearbeitungsanlage 10H umfasst wäre (und somit bspw. dem oben erläuterte IT-System entsprechen würde), würde die Berechnungskomponente 94 auch zur Kommunikation mit der bestimmten Bearbeitungsanlage 10H eine ähnliche Kommunikations-Schnittstelle aufweisen. Weiterhin weist die Berechnungskomponente 94 einen Prozessor 24 mit einem Speicher 92 auf, auf welchem eine Anwendungssoftware 90 ausführbar ist. Ferner umfasst die Berechnungskomponente 94 ein Simulationsmodul 16 mittels welchem eine Simulation 8 durchgeführt werden kann. Für weitere, optionale Details wird hierzu auf die Figur 2 und die dazugehörenden Erläuterungen weiter unten verwiesen.

Dabei ist die Berechnungskomponente 94 bzw. dessen Prozessor 24 vorzugsweise dazu eingerichtet, die Verfügbarkeit der jeweiligen Rohmaterialien 2 sowie der Verfügbarkeit einer Bearbeitungskapazität der jeweiligen Bearbeitungsanlage 10H, 10T für den jeweiligen Bearbeitungsschritt 100H, 100T zu ermitteln. Ferner ist die Berechnungskomponente 94 bzw. dessen Prozessor 24 dazu eingerichtet, eine kombinierte, bearbeitbare Menge 4H, 4T der jeweiligen Rohmaterialien 2 des jeweiligen Produkts 1 durch die jeweilige Bearbeitungsanlage 10H, 10T während eines vorgebbaren Zeitintervalls mittels der Simulation 8 der jeweiligen Bearbeitungsanlage 10H, 10T zu ermitteln, wozu unter anderem die ermittelte Verfügbarkeit der jeweiligen Rohmaterialien 2 und die ermittelte Verfügbarkeit der jeweiligen Bearbeitungskapazität der jeweiligen Bearbeitungsanlage 10H, 10T als Eingangsgrößen der Simulation 8 verwendet werden. Vorzugsweise wird der Simulation 8 weiterhin ein digitaler Zwilling der jeweiligen Bearbeitungsanlage 10H, 10T zur Verfügung gestellt.

Für den nächsten Schritt wird nun eine kombinierte Zielmenge 6H, 6T benötigt, welche vorgebbar ist. Dabei kann die kombinierte Zielmenge 6H, 6T einer Menge an Zwischenprodukten 3 bzw. dem Produkt 1 entsprechen, die bspw. durch die nachfolgende Bearbeitungsanlage 10H, 10T der betrachteten Bearbeitungsanlage 10H, 10T oder durch einen Abnehmer des Produkts 1 beauftragt wird. Ausgehend von der zuvor ermittelten kombinierten, bearbeitbaren Menge 4H, 4T sowie der kombinierten Zielmenge 6H, 6T der jeweiligen Rohmaterialien 2 ist die Berechnungskomponente 94 bzw. dessen Prozessor 24 nun dazu eingerichtet, eine kombinierte Bearbeitungsmenge 5H, 5T der jeweiligen Rohmaterialien 2 des zumindest einen Produkts 1 durch die jeweilige Bearbeitungsanlage 10H, 10T für das vorgebbare Zeitintervall zu ermitteln. Dabei entspricht die kombinierte Bearbeitungsmenge 5H, 5T der jeweiligen Rohmaterialien 2 möglichst mindestens der kombinierten Zielmenge 6H, 6T der jeweiligen Rohmaterialien 2. Schließlich veranlasst die Berechnungskomponente 94 bzw. dessen Prozessor 24 die Durchführung des jeweiligen Bearbeitungsschritts 100H, 100T bei der Herstellung des jeweiligen Produkts 1 durch zumindest eine bestimmte der Bearbeitungsanlagen 10H, 10T während des vorgebbaren Zeitintervalls gemäß der ermittelten kombinierten Bearbeitungsmenge 5H, 5T der jeweiligen Rohmaterialien 2.

Im Rahmen des Ausführungsbeispiels kann es dabei genügen, wenn die bestimmte Bearbeitungsanlage 10H und optional die vorgelagerte Transportanlage 10T berücksichtigt werden. Bei manchen Ausgestaltungen der Erfindung können noch mehr der Bearbeitungsanlagen 10H, 10T bei der Ermittlung der erläuterten Mengen berücksichtigt werden bzw. auch bezüglich des Veranlassens des entsprechenden Bearbeitungsschrittes gemäß der jeweils ermittelten kombinierten Bearbeitungsmenge 5H, 5T.

Beispielsweise kann das vorgeschlagene System 22 bzw. das Netzwerk 20 von Bearbeitungsanlagen 10H, 10T dazu ausgestaltet sein, zwei oder mehr verschiedene Produkte 1 herzustellen. Bspw. wenn die jeweilige Bearbeitungskapazität oder die Verfügbarkeit der jeweiligen Rohmaterialien 2 eingeschränkt ist, sodass die kombinierte bearbeitbare Menge 4h, 4T kleiner als die kombinierte Zielmenge 6h, 6T ist, kann auch eine Priorisierung vorgenommen werden. Dabei kann die Priorisierung vorsehen, dass zumindest eines der Produkte 1 höher gewichtet wird als ein anderes der Produkte 1. In solchen Szenarien kann die verfügbare Bearbeitungskapazität bzw. können die verfügbaren Rohmaterialien 2 vorrangig für die Bearbeitung des höher priorisierten Produkts 1 verwendet werden, wodurch trotz der Einschränkungen noch akzeptable Resultate bei der Herstellung des Produkts 1 erzielt werden können.

Insbesondere um eine hohe Auslastung der jeweiligen Bearbeitungsanlage 10H, 10T, vorzugsweise der jeweiligen Produktionsanlage 10H, zu erreichen, kann die kombinierte Bearbeitungsmenge 5H, 5T größer als die kombinierte Zielmenge 6H, 6T, höchstens jedoch gleich der kombinierten, bearbeitbaren Menge 4H, 4T gewählt werden.

Bei manchen Ausgestaltungen der Erfindung kann die jeweilige Bearbeitungskapazität, d. h. die jeweilige Transportkapazität bzw. die jeweilige Produktionskapazität, angepasst werden, falls die jeweilige Bearbeitungskapazität verursacht, dass die ermittelte kombinierte bearbeitbare Menge 4H, 4T (des jeweiligen Produkts 1) für das vorgebbare Zeitintervall um mehr als einen vorgebbaren Schwellwert von der kombinierten Zielmenge 6H, 6T abweicht. Diese Anpassung kann dazu dienen, Flaschenhälse bzw. Überkapazitäten bei der Herstellung des Produkts 1 zu verringern bzw. zu vermeiden. Dies kann bei Flaschenhälsen bspw. dadurch werden, dass bei einem der Bearbeitungsschritte 100H, 100T zusätzliche entsprechende Bearbeitungsanlagen 10H, 10T hinzugezogen werden, welche den entsprechenden Bearbeitungsschritt 100H, 100T ebenfalls durchführen können.

Ferner kann das System 22 ein computerlesbares Speichermedium 28 umfassen, welches ein Computerprogramm 26 mit Befehlen umfasst, die bei der Ausführung durch das System 22 dieses veranlassen, das vorgeschlagene Verfahren auszuführen.

Die Figur 2 zeigt eine schematische Darstellung eines beispielhaften Zusammenspiels von Simulationsmodulen 16, 16' und Managementmodulen 14, 14' zur Ermittlung der kombinierten, bearbeitbaren Menge einer bestimmten Bearbeitungsanlage 10H.

Die bestimmte Bearbeitungsanlage 10H ist dabei im Rahmen des Ausführungsbeispiels eine Produktionsanlage 10H, der eine Transportanlage 10T' vorgelagert ist. Die bestimmte Bearbeitungsanlage 10H umfasst dabei das erste Managementmodul 14 und das erste Simulationsmodul 16, mittels welchem der Herstellungsschritt 100H simuliert werden kann, den die bestimmte Bearbeitungsanlage 10H durchführt. Die vorgelagerte Transportanlage 10T umfasst das zweite Managementmodul 14' und das zweite Simulationsmodul 16', mittels welchem der Transportschritt 100T' simuliert werden kann, den die vorgelagerte Transportanlage 10T' durchführt.

Das erste Managementmodul 14 übermittelt zunächst eine erste Anfrage 32 bzgl. der zweiten Simulation 8` bspw. der zweiten Ergebnisse 18` der zweiten Simulation 8` an das zweite Managementmodul 14', mit welchem das erste Managementmodul 14 datentechnisch gekoppelt ist. Daraufhin übermittelt das zweite Managementmodul 14' diese zweite Anfrage 32 an das zweite Simulationsmodul 16', welches die zweite Simulation 8` durchführen kann, welche die Transportanlage 10T bzw. den entsprechenden Transportschritt 100T simuliert. Durch die zweite Simulation 8` werden die zweiten Ergebnisse 18'generiert, welche das zweite Simulationsmodul 16' dann an das zweite Managementmodul 14' übermitteln kann. Alternativ sind die zweiten Ergebnisse 18` der zweiten Simulation 8` bereits in dem zweiten Managementmodul 14' verfügbar, ohne dass die zweite Simulation nach dem Erhalt der ersten Anfrage 32 noch durchgeführt werden muss.

Das zweite Managementmodul 14' übermittelt anschließend die zweiten Ergebnisse 18` der zweiten Simulation 8` an das erste Managementmodul 14. Das erste Managementmodul 14 übermittelt eine zweite Anfrage 32` sowie die erhaltenen zweiten Ergebnisse 18` der zweiten Simulation 8' an das erste Simulationsmodul 16, welches dann die erste Simulation 8 durchführen kann, welche die Produktionsanlage 10H bzw. den entsprechenden Herstellungsschritt 100H simuliert. Durch die erste Simulation 8 werden die ersten Ergebnisse 18 generiert, welche das erste Simulationsmodul 16 dann an das erste Managementmodul 14 übermitteln kann.

Vorzugsweise umfassen die jeweiligen übermittelten Ergebnisse 18, 18` zumindest die jeweilige, kombinierte, bearbeitbare Menge 4H, 4T und optional die jeweilige, kombinierte Zielmenge 6H, 6T und weiter optional die jeweilige kombinierte Bearbeitungsmenge 5H, 5T. Die genannten Ergebnisse 18, 18' können insbesondere sowohl auf eine Transportanlage als auch auf einer Produktionsanlage anwendbar sein und somit bezüglich der Art der Bearbeitungsanlage agnostisch sein.

In manchen erweiterten Beispielen können optional zusätzlich ein oder mehrere vor- bzw. nachgelagerte Bearbeitungsanlagen 10H, 10T bzw. Bearbeitungsschritte 100H, 100T berücksichtigt werden (in Figur 2 gestrichelt angedeutet). So kann bspw. die Transportanlage 10T" berücksichtigt werden, welche dem bestimmten Bearbeitungsschritt 10H nach gelagert ist. Dabei kann diese Transportanlage 10T" ein entsprechendes Simulationsmodul 16" und ein entsprechendes Managementmodul 14" aufweisen, welches datentechnisch mit dem ersten Managementmodul 14 gekoppelt sein kann. Alternativ oder zusätzlich kann insbesondere die Produktionsanlage 10H‴ berücksichtigt werden, welche dem vorgelagerten Transportschritt 10T' nochmals vorgelagert ist. Dabei kann diese Produktionsanlage 10H‴ ein entsprechendes Simulationsmodul 16‴ und ein entsprechendes Managementmodul 14‴ aufweisen, welches datentechnisch mit dem zweiten Managementmodul 14' gekoppelt sein kann. Insbesondere kann so bspw. das zweite Managementmodul 14' eine weitere Anfrage an das Managementmodul 14‴ der vorgelagerten Produktionsanlage 10H‴ übermitteln, um entsprechende Ergebnisse einer entsprechenden Simulation des Herstellungsschritts dieser vorgelagerten Produktionsanlage 10H‴ zu erhalten. Dies kann bei manchen Beispielen iterativ fortgesetzt werden, sodass eine größere Kette von Bearbeitungsschritten 100H, 100T bzw. Bearbeitungsanlagen 10H, 10T einer Bearbeitungskette bei der Herstellung des Produkts 1 betrachtet werden kann, was insb. besonders aussagekräftige Ergebnisse bezüglich der zu ermittelnden, bearbeitbare Menge 4H, 4T ermöglicht.

Im Rahmen des Ausführungsbeispiels verwendet dabei das zweite Simulationsmodul 16' ein zweites Datenformat, welches mit einem ersten Datenformat des ersten Simulationsmoduls 16 nicht kompatibel ist. Insbesondere um dennoch einen sinnvollen und effizienten Datenaustausch bzgl. der zweiten Ergebnisse 18` der zweiten Simulation 8' zu ermöglichen, weist das zweite Simulationsmodul 16' eine Daten-Schnittstelle 12 zum Senden und Empfangen von Daten von/zu dem zweiten Managementmodul 14 auf, wobei die Daten-Schnittstelle 12 eine Umsetzung des ersten Datenformats in das zweite Datenformat und umgekehrt ermöglicht.

Der jeweiligen Simulation 8 können bspw. eine der folgenden Eingangsgrößen oder eine Kombination der folgenden Eingangsgrößen zugeführt werden: das vorgebbare Zeitintervall, ein Produkt-Kenner, ein Bearbeitungs-Kenner, ein Bearbeitungs-Startort, ein Bearbeitungs-Zielort, ein Bearbeitungs-Startzeitpunkt, ein Bearbeitungs-Zielzeitpunkt, eine Anzahl, ein Gewicht und eine räumliche Größe der jeweiligen Rohmaterialien 2 sowie die ermittelte Verfügbarkeit der jeweiligen Rohmaterialien 2 und die ermittelte Verfügbarkeit der jeweiligen Bearbeitungskapazität der jeweiligen Bearbeitungsanlage 10H, 10T. Bspw. kann die jeweilige Eingangsgröße direkt von der jeweiligen Bearbeitungsanlage 10H, 10T ermittelt und, insbesondere über das jeweilige Managementmodul 14, 14', der jeweiligen Simulation 8, 8` zugeführt werden.

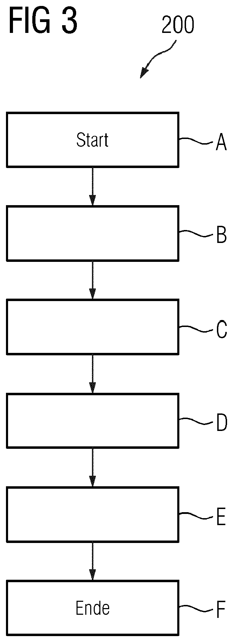

Die Figur 3 zeigt eine schematische Darstellung eines Ablaufdiagramms eines Ausführungsbeispiels des vorgeschlagenen Verfahrens. Bspw. für das in Figur 1 dargestellte System kann der Ablauf 200 mit dem Schritt A starten und mehrere Schritte umfassen, welche durch einen Prozessor, insbesondere den oben erläuterten Prozessor, ausgeführt werden können.

Diese Schritte umfassen den Schritt B gemäß welchem die Verfügbarkeit der jeweiligen Rohmaterialien sowie die Verfügbarkeit einer jeweiligen Bearbeitungskapazität der jeweiligen Bearbeitungsanlage für den jeweiligen Bearbeitungsschritt ermittelt wird; den Schritt C gemäß welchem eine kombinierte, bearbeitbare Menge der jeweiligen Rohmaterialien des jeweiligen Produkts durch die jeweilige Bearbeitungsanlage während eines vorgebbaren Zeitintervalls mittels einer Simulation der jeweiligen Bearbeitungsanlage mithilfe der ermittelten Verfügbarkeit der jeweiligen Rohmaterialien und der ermittelten Verfügbarkeit der jeweiligen Bearbeitungskapazität der jeweiligen Bearbeitungsanlage ermittelt wird; den Schritt D gemäß welchem eine kombinierte Bearbeitungsmenge der jeweiligen Rohmaterialien des zumindest einen Produkts durch die jeweilige Bearbeitungsanlage für das vorgebbare Zeitintervall anhand der ermittelten, kombinierten bearbeitbaren Menge ermittelt wird, wobei die kombinierte Bearbeitungsmenge der jeweiligen Rohmaterialien möglichst mindestens einer kombinierten Zielmenge der jeweiligen Rohmaterialien entspricht; und den Schritt E gemäß welchem die Durchführung des jeweiligen Bearbeitungsschritts bei der Herstellung des jeweiligen Produkts durch zumindest eine bestimmte der Bearbeitungsanlagen während des vorgebbaren Zeitintervalls gemäß der ermittelten kombinierten Bearbeitungsmenge der jeweiligen Rohmaterialien veranlasst wird. Mit dem Schritt F kann der Ablauf enden.

In manchen Beispielen kann der erläuterte Ablauf 200 weitere Schritte umfassen, die weiter oben im Zusammenhang mit dem vorgeschlagenen Verfahren bzw. dem vorgeschlagenen System erläutert wurden.

## Patentansprüche

1. Computer-implementiertes Verfahren zur Herstellung zumindest eines Produktes (1) durch ein Netzwerk (20) von Bearbeitungsanlagen (10H, 10T) umfassend zumindest eine Produktionsanlage (10H) und zumindest eine Transportanlage (10T),
wobei die Herstellung des jeweiligen Produkts (1) zumindest zwei sequenzielle Bearbeitungsschritte (100H, 100T) umfasst, welche zumindest einen Herstellungsschritt (100H) und zumindest einen Transportschritt (100T) umfassen,
wobei bei dem jeweiligen Herstellungsschritt (100H) ausgehend von jeweiligen Rohmaterialien (2) mittels der jeweiligen Produktionsanlage (10H) ein jeweiliges Zwischenprodukt (3) hergestellt wird, wobei das jeweilige Zwischenprodukt (3) des vorhergehenden Herstellungsschrittes (100H) von den jeweiligen Rohmaterialien (2) des nachfolgenden Herstellungsschrittes (100H) umfasst ist und wobei das jeweilige Zwischenprodukt (3) des letzten Herstellungsschrittes (100H) das jeweilige Produkt (1) ist,
wobei bei dem jeweiligen Transportschritt (100T) die jeweiligen Rohmaterialien (2), insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H) transportiert wird, und
wobei das Verfahren folgende Schritte umfasst:
• Ermitteln der Verfügbarkeit der jeweiligen Rohmaterialien (2) sowie der Verfügbarkeit einer jeweiligen Bearbeitungskapazität der jeweiligen Bearbeitungsanlage (10H, 10T) für den jeweiligen Bearbeitungsschritt (100H, 100T);
• Ermitteln einer kombinierten, bearbeitbaren Menge (4H, 4T) der jeweiligen Rohmaterialien (2) des jeweiligen Produkts (1) durch die jeweilige Bearbeitungsanlage (10H, 10T) während eines vorgebbaren Zeitintervalls mittels einer Simulation (8) der jeweiligen Bearbeitungsanlage (10H, 10T) mithilfe der ermittelten Verfügbarkeit der jeweiligen Rohmaterialien (2) und der ermittelten Verfügbarkeit der jeweiligen Bearbeitungskapazität der jeweiligen Bearbeitungsanlage (10H, 10T);
• Ermitteln einer kombinierten Bearbeitungsmenge (5H, 5T) der jeweiligen Rohmaterialien (2) des zumindest einen Produkts (1) durch die jeweilige Bearbeitungsanlage (10H, 10T) für das vorgebbare Zeitintervall anhand der ermittelten, kombinierten bearbeitbaren Menge (4H, 4T), wobei die kombinierte Bearbeitungsmenge (5H, 5T) der jeweiligen Rohmaterialien (2) möglichst mindestens einer kombinierten Zielmenge (6H, 6T) der jeweiligen Rohmaterialien (2) entspricht; und
• Veranlassen der Durchführung des jeweiligen Bearbeitungsschritts (100H, 100T) bei der Herstellung des jeweiligen Produkts (1) durch zumindest eine bestimmte der Bearbeitungsanlagen (10H, 10T) während des vorgebbaren Zeitintervalls gemäß der ermittelten kombinierten Bearbeitungsmenge (5H, 5T) der jeweiligen Rohmaterialien (2) .

2. Computer-implementiertes Verfahren nach Anspruch 1, weiterhin umfassend die Verfahrensschritte:
• Bereitstellen von zumindest einem ersten und einem zweiten Managementmodul (14, 14') und von zumindest einem ersten und einem zweiten Simulationsmodul (16, 16'), wobei das erste Simulationsmodul (16) zur Durchführung der ersten Simulation (8) der bestimmten Bearbeitungsanlage (10H, 10T) und das zweite Simulationsmodul (16') zur Durchführung der zweiten Simulation (8') jener Bearbeitungsanlage (10H', 10T') vorgesehen ist, die der bestimmten Bearbeitungsanlage (10H, 10T) vorgelagert und/oder nachgelagert ist, und
wobei das erste Managementmodul (14) zur Speicherung der ersten Ergebnisses (18) der ersten Simulation (8) und das zweite Managementmodul (14') zur Speicherung der zweiten Ergebnisses (18') der zweiten Simulation (8') vorgesehen ist;
• Übermitteln einer ersten Anfrage (32) bzgl. der zweiten Ergebnisse (18') von dem ersten Managementmodul (14) an das zweite Managementmodul (14');
• Übermitteln der zweiten Ergebnisse (18') von dem zweiten Managementmodul (14') an das erste Managementmodul (14) nach Abschluss der zweiten Simulation (8') und nach Übermittlung der zweiten Ergebnisse (18') von dem zweiten Simulationsmodul (16') an das zweite Managementmodul (14');
• Übermitteln der zweiten Ergebnisse (18') und einer zweiten Anfrage (32') bzgl. der ersten Ergebnisse (18) von dem ersten Managementmodul (14) an das erste Simulationsmodul (16);
• Übermitteln der ersten Ergebnisse (18) von dem ersten Simulationsmodul (16) an das erste Managementmodul (14).

3. Computer-implementiertes Verfahren nach Anspruch 2,
wobei ein drittes der Simulationsmodule (16) ein erstes Datenformat verwendet, welches mit einem zweiten Datenformat eines vierten der Simulationsmodule (16) nicht kompatibel ist,
wobei das dritte Simulationsmodul (16) eine Daten-Schnittstelle (12) zum Senden und Empfangen von Daten von/zu dem jeweiligen Managementmodul (14) aufweist, und
wobei die Daten-Schnittstelle (12) eine Umsetzung des ersten Datenformats in das zweite Datenformat und umgekehrt ermöglicht.

4. Computer-implementiertes Verfahren nach Anspruch 2 oder 3, wobei die jeweiligen Ergebnisse (18) zumindest die jeweilige, kombinierte, bearbeitbare Menge (4) und optional die jeweilige, kombinierte Zielmenge (6) und weiter optional die jeweilige kombinierte Bearbeitungsmenge (5) umfassen.

5. Computer-implementiertes Verfahren nach einem der vorhergehenden Ansprüche,
wobei der jeweiligen Simulation (8) eine der folgenden Eingangsgrößen wird oder eine Kombination der folgenden Eingangsgrößen zugeführt werden: das vorgebbare Zeitintervall, ein Produkt-Kenner, ein Bearbeitungs-Kenner, ein Bearbeitungs-Startort, ein Bearbeitungs-Zielort, ein Bearbeitungs-Startzeitpunkt, ein Bearbeitungs-Zielzeitpunkt, eine Anzahl, ein Gewicht und eine räumliche Größe der jeweiligen Rohmaterialien (2) sowie die ermittelte Verfügbarkeit der jeweiligen Rohmaterialien (2) und die ermittelte Verfügbarkeit der jeweiligen Bearbeitungskapazität der jeweiligen Bearbeitungsanlage (10H, 10T).

6. Computer-implementiertes Verfahren nach einem der vorhergehenden Ansprüche, weiterhin umfassend die Verfahrensschritte:
• Ermitteln einer kombinierten Herstellmenge (5H) während des jeweiligen Herstellungsschrittes (100H), wobei die kombinierte Herstellmenge (5H) möglichst mindestens einer kombinierten Herstell-Zielmenge (6H) entspricht; und
• Veranlassen der Durchführung des jeweiligen Herstellungsschritts (100H) durch die jeweilige Produktionsanlage (10H) während des vorgebbaren Zeitintervalls gemäß der ermittelten kombinierten Herstellmenge (5H).

7. Computer-implementiertes Verfahren nach einem der vorhergehenden Ansprüche, weiterhin umfassend die Verfahrensschritte:
• Ermitteln einer kombinierten Transportmenge (5T) während des vorgebbaren Zeitintervalls, insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H), wobei die kombinierte Transportmenge (5T) möglichst mindestens einer kombinierten Transport-Zielmenge (6T) entspricht; und
• Veranlassen der Durchführung des jeweiligen Transportschritts (100T), insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H) während des vorgebbaren Zeitintervalls gemäß der ermittelten kombinierten Transportmenge (5T).

8. Computer-implementiertes Verfahren nach einem der vorhergehenden Ansprüche,
wobei zumindest zwei verschiedene Produkte (1) bearbeitet werden,
wobei bei der Ermittlung der kombinierten Bearbeitungsmenge (5H, 5T) der jeweiligen Rohmaterialien (2) der zumindest zwei Produkte (1) für das vorgebbare Zeitintervall eine Priorisierung vorgenommen wird, und
wobei die Priorisierung dergestalt ist, dass zumindest eines der Produkte (1) höher gewichtet ist als zumindest ein weiteres der Produkte (1).

9. Computer-implementiertes Verfahren nach einem der vorhergehenden Ansprüche,
wobei die kombinierte Bearbeitungsmenge (5H, 5T) größer als die kombinierte Zielmenge (6H, 6T) und höchstens gleich der kombinierten, bearbeitbaren Menge (4H, 4T) ist.

10. Computer-implementiertes Verfahren nach einem der vorhergehenden Ansprüche,
wobei eine Anpassung der jeweiligen Transportkapazität verlasst wird, falls die jeweilige Transportkapazität verursacht, dass die ermittelte, kombinierte bearbeitbare Menge (4H, 4T) des jeweiligen Produkts (1) für das vorgebbare Zeitintervall um mehr als einen vorgebbaren ersten Schwellwert von der kombinierten Zielmenge (6H, 6T) abweicht.

11. Computer-implementiertes Verfahren nach einem der vorhergehenden Ansprüche,
wobei eine Anpassung der jeweiligen Produktionskapazität verlasst wird, falls die jeweilige Produktionskapazität verursacht, dass die ermittelte, kombinierte bearbeitbare Menge (4H, 4T) des jeweiligen Produkts (1) für das vorgebbare Zeitintervall um mehr als einen vorgebbaren zweiten Schwellwert von der kombinierten Zielmenge (6H, 6T) abweicht.

12. Computer-implementiertes Verfahren nach einem der vorhergehenden Ansprüche,
wobei die Bearbeitungsschritte (100H, 100T) zumindest einen jeweiligen weiteren Transportschritt (100T) zum Transport der jeweiligen Rohmaterialien (2) von einer jeweiligen Rohmaterial-Quelle (7) zu der jeweiligen Produktionsanlage (10H) umfassen, und
wobei bei der Ermittlung der Verfügbarkeit der jeweiligen Transportkapazität und bei der Ermittlung der kombinierten, bearbeitbaren Menge (4H, 4T) der Transport der jeweiligen Rohmaterialien (2) von der jeweiligen Rohmaterial-Quelle (7) zu der jeweiligen Produktionsanlage (10H) berücksichtigt wird.

13. System (22), insbesondere Produktionsanlage (10H) oder Transportanlage (10T), für ein Netzwerk (20) von Bearbeitungsanlagen (10H, 10T) umfassend zumindest eine Produktionsanlage (10H) und zumindest eine Transportanlage (10T) zur Herstellung zumindest eines Produktes (1) nach einem der vorhergehenden Ansprüche,
wobei das System (22) zumindest eine Schnittstelle (30) zur Kommunikation mit zumindest einer weiteren der Bearbeitungsanlagen (10H, 10T) aufweist, und
wobei das System (22) zumindest einen Prozessor (24) aufweist, der so konfiguriert ist, dass er die Schritte des Verfahrens nach einem der vorhergehenden Ansprüche ausführt.

14. Computerprogramm (26), umfassend Befehle, die bei der Ausführung des Programms durch das System (22) nach Anspruch 13 dieses veranlassen, das Verfahren nach einem der Ansprüche 1 bis 12 auszuführen.

15. Computerlesbares Speichermedium (28) umfassend Befehle, die bei der Ausführung durch das System (22) nach Anspruch 13 dieses veranlassen, das Verfahren nach einem der Ansprüche 1 bis 12 auszuführen.

## Geänderte Patentansprüche

### Geänderte Patentansprüche gemäss Regel 137(2) EPÜ.

1. Computer-implementiertes Verfahren zur Herstellung zumindest eines Produktes (1) durch ein Netzwerk (20) von Bearbeitungsanlagen (10H, 10T) umfassend zumindest eine Produktionsanlage (10H) und zumindest eine Transportanlage (10T),
wobei die Herstellung des jeweiligen Produkts (1) zumindest zwei sequenzielle Bearbeitungsschritte (100H, 100T) umfasst, welche zumindest einen Herstellungsschritt (100H) und zumindest einen Transportschritt (100T) umfassen,
wobei bei dem jeweiligen Herstellungsschritt (100H) ausgehend von jeweiligen Rohmaterialien (2) mittels der jeweiligen Produktionsanlage (10H) ein jeweiliges Zwischenprodukt (3) hergestellt wird, wobei das jeweilige Zwischenprodukt (3) des vorhergehenden Herstellungsschrittes (100H) von den jeweiligen Rohmaterialien (2) des nachfolgenden Herstellungsschrittes (100H) umfasst ist und wobei das jeweilige Zwischenprodukt (3) des letzten Herstellungsschrittes (100H) das jeweilige Produkt (1) ist,
wobei bei dem jeweiligen Transportschritt (100T) die jeweiligen Rohmaterialien (2), insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H) transportiert wird, und
wobei das Verfahren folgende Schritte umfasst:
• Ermitteln der Verfügbarkeit der jeweiligen Rohmaterialien (2) sowie der Verfügbarkeit einer jeweiligen Bearbeitungskapazität der jeweiligen Bearbeitungsanlage (10H, 10T) für den jeweiligen Bearbeitungsschritt (100H, 100T);
• Ermitteln einer kombinierten, bearbeitbaren Menge (4H, 4T) der jeweiligen Rohmaterialien (2) des jeweiligen Produkts (1) durch die jeweilige Bearbeitungsanlage (10H, 10T) während eines vorgebbaren Zeitintervalls mittels einer Simulation (8) der jeweiligen Bearbeitungsanlage (10H, 10T) mithilfe der ermittelten Verfügbarkeit der jeweiligen Rohmaterialien (2) und der ermittelten Verfügbarkeit der jeweiligen Bearbeitungskapazität der jeweiligen Bearbeitungsanlage (10H, 10T);
• Ermitteln einer kombinierten Bearbeitungsmenge (5H, 5T) der jeweiligen Rohmaterialien (2) des zumindest einen Produkts (1) durch die jeweilige Bearbeitungsanlage (10H, 10T) für das vorgebbare Zeitintervall anhand der ermittelten, kombinierten bearbeitbaren Menge (4H, 4T), wobei die kombinierte Bearbeitungsmenge (5H, 5T) der jeweiligen Rohmaterialien (2) möglichst mindestens einer kombinierten Zielmenge (6H, 6T) der jeweiligen Rohmaterialien (2) entspricht; und
• Veranlassen der Durchführung des jeweiligen Bearbeitungsschritts (100H, 100T) bei der Herstellung des jeweiligen Produkts (1) durch zumindest eine bestimmte der Bearbeitungsanlagen (10H, 10T) während des vorgebbaren Zeitintervalls gemäß der ermittelten kombinierten Bearbeitungsmenge (5H, 5T) der jeweiligen Rohmaterialien (2) .

2. Computer-implementiertes Verfahren nach Anspruch 1, weiterhin umfassend die Verfahrensschritte:
• Bereitstellen von zumindest einem ersten und einem zweiten Managementmodul (14, 14') und von zumindest einem ersten und einem zweiten Simulationsmodul (16, 16'), wobei das erste Simulationsmodul (16) zur Durchführung der ersten Simulation (8) der bestimmten Bearbeitungsanlage (10H, 10T) und das zweite Simulationsmodul (16') zur Durchführung der zweiten Simulation (8') jener Bearbeitungsanlage (10H', 10T') vorgesehen ist, die der bestimmten Bearbeitungsanlage (10H, 10T) vorgelagert und/oder nachgelagert ist, und
wobei das erste Managementmodul (14) zur Speicherung der ersten Ergebnisses (18) der ersten Simulation (8) und das zweite Managementmodul (14') zur Speicherung der zweiten Ergebnisses (18') der zweiten Simulation (8') vorgesehen ist;
• Übermitteln einer ersten Anfrage (32) bzgl. der zweiten Ergebnisse (18') von dem ersten Managementmodul (14) an das zweite Managementmodul (14');
• Übermitteln der zweiten Ergebnisse (18') von dem zweiten Managementmodul (14') an das erste Managementmodul (14) nach Abschluss der zweiten Simulation (8') und nach Übermittlung der zweiten Ergebnisse (18') von dem zweiten Simulationsmodul (16') an das zweite Managementmodul (14');
• Übermitteln der zweiten Ergebnisse (18') und einer zweiten Anfrage (32') bzgl. der ersten Ergebnisse (18) von dem ersten Managementmodul (14) an das erste Simulationsmodul (16);
• Übermitteln der ersten Ergebnisse (18) von dem ersten Simulationsmodul (16) an das erste Managementmodul (14).

3. Computer-implementiertes Verfahren nach Anspruch 2,
wobei ein drittes der Simulationsmodule (16) ein erstes Datenformat verwendet, welches mit einem zweiten Datenformat eines vierten der Simulationsmodule (16) nicht kompatibel ist,
wobei das dritte Simulationsmodul (16) eine Daten-Schnittstelle (12) zum Senden und Empfangen von Daten von/zu dem jeweiligen Managementmodul (14) aufweist, und
wobei die Daten-Schnittstelle (12) eine Umsetzung des ersten Datenformats in das zweite Datenformat und umgekehrt ermöglicht.

4. Computer-implementiertes Verfahren nach Anspruch 2 oder 3, wobei die jeweiligen Ergebnisse (18) zumindest die jeweilige, kombinierte, bearbeitbare Menge (4) und optional die jeweilige, kombinierte Zielmenge (6) und weiter optional die jeweilige kombinierte Bearbeitungsmenge (5) umfassen.

5. Computer-implementiertes Verfahren nach einem der vorhergehenden Ansprüche,
wobei der jeweiligen Simulation (8) eine der folgenden Eingangsgrößen wird oder eine Kombination der folgenden Eingangsgrößen zugeführt werden: das vorgebbare Zeitintervall, ein Produkt-Kenner, ein Bearbeitungs-Kenner, ein Bearbeitungs-Startort, ein Bearbeitungs-Zielort, ein Bearbeitungs-Startzeitpunkt, ein Bearbeitungs-Zielzeitpunkt, eine Anzahl, ein Gewicht und eine räumliche Größe der jeweiligen Rohmaterialien (2) sowie die ermittelte Verfügbarkeit der jeweiligen Rohmaterialien (2) und die ermittelte Verfügbarkeit der jeweiligen Bearbeitungskapazität der jeweiligen Bearbeitungsanlage (10H, 10T).

6. Computer-implementiertes Verfahren nach einem der vorhergehenden Ansprüche, weiterhin umfassend die Verfahrensschritte:
• Ermitteln einer kombinierten Herstellmenge (5H) während des jeweiligen Herstellungsschrittes (100H), wobei die kombinierte Herstellmenge (5H) möglichst mindestens einer kombinierten Herstell-Zielmenge (6H) entspricht; und
• Veranlassen der Durchführung des jeweiligen Herstellungsschritts (100H) durch die jeweilige Produktionsanlage (10H) während des vorgebbaren Zeitintervalls gemäß der ermittelten kombinierten Herstellmenge (5H).

7. Computer-implementiertes Verfahren nach einem der vorhergehenden Ansprüche, weiterhin umfassend die Verfahrensschritte:
• Ermitteln einer kombinierten Transportmenge (5T) während des vorgebbaren Zeitintervalls, insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H), wobei die kombinierte Transportmenge (5T) möglichst mindestens einer kombinierten Transport-Zielmenge (6T) entspricht; und
• Veranlassen der Durchführung des jeweiligen Transportschritts (100T), insb. von der Produktionsanlage (10H) des vorhergehenden Herstellungsschrittes (100H), mittels der jeweiligen Transportanlage (10T) zur Produktionsanlage (10H) des nachfolgenden Herstellungsschrittes (100H) während des vorgebbaren Zeitintervalls gemäß der ermittelten kombinierten Transportmenge (5T).

8. Computer-implementiertes Verfahren nach einem der vorhergehenden Ansprüche,
wobei zumindest zwei verschiedene Produkte (1) bearbeitet werden,
wobei bei der Ermittlung der kombinierten Bearbeitungsmenge (5H, 5T) der jeweiligen Rohmaterialien (2) der zumindest zwei Produkte (1) für das vorgebbare Zeitintervall eine Priorisierung vorgenommen wird, und
wobei die Priorisierung dergestalt ist, dass zumindest eines der Produkte (1) höher gewichtet ist als zumindest ein weiteres der Produkte (1).

9. Computer-implementiertes Verfahren nach einem der vorhergehenden Ansprüche,
wobei die kombinierte Bearbeitungsmenge (5H, 5T) größer als die kombinierte Zielmenge (6H, 6T) und höchstens gleich der kombinierten, bearbeitbaren Menge (4H, 4T) ist.

10. Computer-implementiertes Verfahren nach einem der vorhergehenden Ansprüche,
wobei eine Anpassung der jeweiligen Transportkapazität verlasst wird, falls die jeweilige Transportkapazität verursacht, dass die ermittelte, kombinierte bearbeitbare Menge (4H, 4T) des jeweiligen Produkts (1) für das vorgebbare Zeitintervall um mehr als einen vorgebbaren ersten Schwellwert von der kombinierten Zielmenge (6H, 6T) abweicht.

11. Computer-implementiertes Verfahren nach einem der vorhergehenden Ansprüche,
wobei eine Anpassung der jeweiligen Produktionskapazität verlasst wird, falls die jeweilige Produktionskapazität verursacht, dass die ermittelte, kombinierte bearbeitbare Menge (4H, 4T) des jeweiligen Produkts (1) für das vorgebbare Zeitintervall um mehr als einen vorgebbaren zweiten Schwellwert von der kombinierten Zielmenge (6H, 6T) abweicht.

12. Computer-implementiertes Verfahren nach einem der vorhergehenden Ansprüche,
wobei die Bearbeitungsschritte (100H, 100T) zumindest einen jeweiligen weiteren Transportschritt (100T) zum Transport der jeweiligen Rohmaterialien (2) von einer jeweiligen Rohmaterial-Quelle (7) zu der jeweiligen Produktionsanlage (10H) umfassen, und
wobei bei der Ermittlung der Verfügbarkeit der jeweiligen Transportkapazität und bei der Ermittlung der kombinierten, bearbeitbaren Menge (4H, 4T) der Transport der jeweiligen Rohmaterialien (2) von der jeweiligen Rohmaterial-Quelle (7) zu der jeweiligen Produktionsanlage (10H) berücksichtigt wird.

13. System (22), insbesondere Produktionsanlage (10H) oder Transportanlage (10T), für ein Netzwerk (20) von Bearbeitungsanlagen (10H, 10T) umfassend zumindest eine Produktionsanlage (10H) und zumindest eine Transportanlage (10T) zur Herstellung zumindest eines Produktes (1) nach einem der vorhergehenden Ansprüche,
wobei das System (22) zumindest eine Schnittstelle (30) zur Kommunikation mit zumindest einer weiteren der Bearbeitungsanlagen (10H, 10T) aufweist, und
wobei das System (22) zumindest einen Prozessor (24) aufweist, der so konfiguriert ist, dass er die Schritte des Verfahrens nach einem der vorhergehenden Ansprüche ausführt.

14. Computerprogramm (26), umfassend Befehle, die bei der Ausführung des Programms durch das System (22) nach Anspruch 13 dieses veranlassen, das Verfahren nach einem der Ansprüche 1 bis 12 auszuführen.

15. Computerlesbares Speichermedium (28) umfassend Befehle, die bei der Ausführung durch das System (22) nach Anspruch 13 dieses veranlassen, das Verfahren nach einem der Ansprüche 1 bis 12 auszuführen.
